# EUROPEAN PATENT SPECIFICATION

(11) **EP 4 475 294 B1**
(45) Date of publication and mention of the grant of the patent: **04.11.2026**
(21) Application number: 24179069.0
(22) Date of filing: 30.05.2024
(51) Int. Cl.: H01M 50/148, H01M 50/548, H01M 50/566, H01M 50/559, H01M 50/538, H01M 50/152, H01M 50/528, H01M 50/107, H01M 50/531, H01M 10/0587, H01M 50/169

(54) **SEAM WELDING STRUCTURE OF BATTERY CAN, CURRENT COLLECTING PLATE, AND CAP AND BATTERY CELL USING THE SAME**
NAHTSCHWEISSSTRUKTUR EINER BATTERIEDOSE, STROMSAMMELPLATTE UND KAPPE UND BATTERIEZELLE DAMIT
STRUCTURE DE SOUDAGE DE JOINT DE BOÎTIER DE BATTERIE, PLAQUE DE COLLECTE DE COURANT, ET CAPUCHON ET ÉLÉMENT DE BATTERIE L'UTILISANT

(30) Priority: 09.06.2023 KR 20230074474; 11.10.2023 KR 20230135320; 29.05.2024 KR 20240070118
(43) Date of publication of application: 11.12.2024
(73) Proprietor: LG Energy Solution, Ltd., Seoul 07335 (KR)
(72) Inventor: PARK, Jeongho, 34122 Daejeon (KR); HWANG, Dongsung, 34122 Daejeon (KR); CHO, Sungmin, 34122 Daejeon (KR); HONG, Taerim, 34122 Daejeon (KR)
(74) Representative: Goddar, Heinz J.

(56) References cited:
- CN-A- 115 275 464
- US-A1- 2023 012 811

## Description

### BACKGROUND

The present disclosure relates to the field of batteries, and in particular a welding structure of a battery can, a current collector plate, and a cap, as well as a battery cell to which the same is applied.

The process of manufacturing a cylindrical cell battery may include deep drawing a metal sheet to form a can with a circular bottom and a circular tube-shaped sidewall member connected to the circular bottom, followed by accommodating an electrode assembly in the can, and then covering the open end of the sidewall member with a cap.

Meanwhile, a current collector plate, which is in contact with and electrically connected to at least one electrode tab of the electrode assembly, is provided at one of two axial ends of the electrode assembly - namely the one that faces the open end. The current collector plate is in contact with and electrically connected to the cap or the sidewall member through a method wherein the current collector plate is welded to the cap or the sidewall member.

In the process of welding the current collector plate to the cap or the sidewall member, the current collector plate may be maintained in close contact with the cap or sidewall member. In order to achieve this, a jig that maintains the current collector plate in close contact with the cap or the sidewall member may be necessary, and in addition, a mask exposing the welding area may also be necessary.

In order to maintain the current collector plate to the cap or the sidewall member through the mask or the jig, a space for accommodating the mask or the jig may be provided in the can. However, such space will remain empty after the mask or the jig is removed, resulting in reduced efficiency of utilization of the internal volume of the can. This hinders the energy density per unit volume of the can.

Due to the tolerances in region between the can, current collector plate, and the cap, there is a risk that the laser beam for welding may penetrate directly into the can. Additionally, during welding, a large amount of heat energy may be generated, which may be transmitted to the separator of the electrode assembly through the can, potentially resulting in decomposition of the separator or deterioration of the separator, such as by melting or closing of the pores of the separator.

In addition, in completing the assembly of the cylindrical can, a process of electrically connecting the current collector plate to the cap or the sidewall member and a process of connecting the cap to the sidewall member are performed separately. This increases the man-hours involved in assembling the battery cell components, which reduces the production efficiency of the cylindrical battery cells and increases the production cost.

CN 115275464 A discloses a bottom cover assembly and a cylindrical battery, the bottom cover assembly is used for the cylindrical battery, and the cylindrical battery comprises a cylindrical shell and a roll core arranged in the cylindrical shell. The bottom cover assembly comprises a bottom cover and a reinforcing piece, the bottom cover is provided with a first side and a second side which are opposite, the bottom cover comprises a current collecting part and a lap joint part annularly arranged on the periphery of the current collecting part, the outer periphery of the lap joint part is used for being welded to the cylindrical shell, and the second side of the current collecting part is used for being welded and fixed to a tab of the roll core. And the reinforcing piece is arranged on the first side of the bottom cover and is welded and fixed with the bottom cover. According to the technical scheme, the overall energy density of the cylindrical battery is improved, and the production takt of the cylindrical battery is improved.

US 2023/012811 A1 discloses a secondary battery. The secondary battery includes a can, an electrode assembly in the can, a collector plate electrically connected to the electrode assembly, and a terminal having a coupling part mechanically coupled to the collector plate by a pressure, electrically connected to the collector plate, and electrically connected to the electrode assembly.

### SUMMARY OF THE DISCLOSURE

In order to address at least some of the above-mentioned problems, the present disclosure provides a welding structure of a battery can, current collector plate, and cap, and a battery cell to which the same are applied, wherein it is possible to obtain increased energy density per volume without wasting or sacrificing the internal volume of the can, such as by omitting a separate welding mask or jig in the process of welding the current collector plate to the can.

Additionally, or alternatively, the present disclosure may include integrating the process of welding the current collector plate to the can and the process of welding the cap to the sidewall member into a single welding process, which may beneficially increase production efficiency and reduce production cost.

In addition, or alternatively, the can, the current collector plate, and the cap may function as a mask and jig in accordance with the present disclosure, which may beneficially increase the stability of the process. Additionally, or alternatively, the welding structure of battery can, current collector plate, and cap may beneficially simplify the assembly process of the current collector plate and cap without having an adverse effect on affect the electrode assembly, such as by suppressing excessive generation of welding heat.

The technical problems solved by the present disclosure are not limited to the objects described above, however, but rather other objects and advantages of the present disclosure that are not described may be understood through the following description and examples.

The above-described problem may be addressed by forming a first welding portion where the can, the current collector plate, and the cap are welded together in such a manner that the desired internal resistance of the battery is obtained via a temporary welding process, a preliminary welding process, or a tack welding process, in which the cap becomes affixed to the can. Then, a second welding portion for sealing the can may be formed by welding the seam between the can and cap.

Beneficially, the desired internal resistance may be obtained, and the can may be reliably sealed, all while suppressing excessive welding heat and maintaining the simplicity of the welding process.

The invention is defined by the subject matter of the independent claims. Advantageous embodiments are subject to the dependent claims.

In accordance with one aspect of the present disclosure, a battery cell is provided. The battery cell includes a can, an electrode assembly, a current collector plate, and a cap. The can has a sidewall circumscribing an internal volume and defining an opening to the internal volume at a first end of the can along a central longitudinal axis. The electrode assembly is within the internal volume of the can. The cap seals the opening of the can so as to enclose the internal volume. The current collector plate is electrically connected to an electrode of the electrode assembly. Further, the current collector plate includes a peripheral portion in contact with the sidewall so as to be electrically connected with the can. The battery cell further comprises a plurality of first welding portions. The sidewall along the opening, an edge of the cap, and the peripheral portion of the current collector plate are all welded together along each of the plurality of first welding portions. The plurality of first welding portions are spaced apart from one another along a circumferential direction about the central longitudinal axis. The battery cell further has a second welding portion, portions of which overlap with the plurality of first welding portions. The sidewall along the opening and the edge of the cap are both welded together along the second welding portion that extends continuously along the circumferential direction. A cross-sectional area of each of the plurality of first welding portions in a respective plane extending orthogonally to the circumferential direction at a location of the respective first welding portion is larger than a cross-sectional area of the second welding portion in the respective plane.

A triple weld may be provided, joining together: the sidewall along the opening, an edge of the cap, and the peripheral portion of the current collector plate. Such triple weld may be formed along each of a plurality of first welding portions. Such plurality of first welding portions may be spaced apart from one another along a circumferential direction about the central longitudinal axis. The sidewall along the opening and the edge of the cap may both be welded together along a second welding portion. Such second welding portion may extend continuously along the circumferential direction.

According to some aspects of the battery cell, at least a portion of the second welding portion overlaps with the plurality of first welding portions. According to yet other aspects of the battery cell, a cross-sectional area of each of the plurality of first welding portions in a respective plane is larger than a cross-sectional area of the second welding portion in the respective plane. Such cross-sectional plane extends orthogonally to the circumferential direction at the location of the respective welding portion. According to some other aspects of the battery cell, a depth that the plurality of first welding portions extend away from the first end of the can along an axial direction may be deeper than a depth that the second welding portion extends away from the first end of the can in the axial direction. Such axial direction extends parallel to the central longitudinal axis. **In** other aspects of the battery cell, an outer diameter of the peripheral portion of the current collector plate may correspond to that of a radially outer surface of the cap. **In** some other aspects of the battery cell, the edge of the cap may have a radially outer surface facing and in contact with a radially inner surface of the sidewall. **In** yet other aspects of the battery cell, an outer diameter of the peripheral portion of the current collector plate may be larger than that of a radially outer surface of the edge of the cap.

According to some of the above aspects of the battery cell, the edge of the cap may have a radially outer surface facing a radially inner surface of the sidewall with a gap defined therebetween. According to some of such aspects, a welded region may extend within the gap between the radially outer surface of the edge of the cap and the radially inner surface of the sidewall.

According to some other of the above aspects of the battery cell, the edge of the cap may have a radially outer surface facing a radially inner surface of the sidewall. Additionally, at least one first portion of the radially outer surface of the edge of the cap may have a first diameter corresponding to an outer diameter of the peripheral portion of the current collector plate. Furthermore, at least one second portion of the radially outer surface of the edge of the cap may have a second diameter smaller than the outer diameter of the peripheral portion of the current collector plate. According to some of such aspects, the radially outer surface of the edge of the cap may have two or more of the first portions and two or more of the second portions that alternate with one another about the central longitudinal axis in the circumferential direction.

According to yet other of the above aspects of the battery cell, the edge of the cap may have a radially outer surface facing a radially inner surface of the sidewall. Additionally, the radially outer surface may have a plurality of large diameter portions and a plurality of small diameter portions alternating with one another about the central longitudinal axis in the circumferential direction. Such plurality of small diameter portions may have a smaller diameter than the plurality of large diameter portions. According to some of such aspects, the large diameter portions of the radially outer surface of the edge of the cap may contact the radially inner surface of the sidewall, while the small diameter portions of the radially outer surface of the edge of the cap are spaced from the radially inner surface of the sidewall.

**In** accordance with another aspect of the present disclosure, a method of manufacturing a battery cell is provided. The method may include positioning a cap and a current collector plate in an assembled position stacked on one another within an opening of a can. **In** such assembled position, the current collector plate may be electrically connected to an electrode assembly received within an internal volume of the can. Moreover, in such assembled position, a peripheral portion of the current collector plate may be in contact with a radially inner surface of a sidewall of the can surrounding the opening. Furthermore, in such assembled position, the cap may be positioned above the current collector plate along a central longitudinal axis of the can, such that the cap is further from the electrode assembly than the current collector plate. Preferably, the method also includes the step of forming a plurality of first welding portions in which the following three components are welded together so as to secure their positions with respect to one another: the sidewall of the can along the opening, an edge of the cap, and the peripheral portion of the current collector plate are all welded together, in order to secure their positions with respect to one another. Moreover, the plurality of first welding portions may be spaced apart from one another along the circumferential direction about the central longitudinal axis. The method preferably also includes the step of forming a second welding portion in which the sidewall of the can along the opening and the edge of the cap are both welded together. Such second welding portion may extend continuously along the circumferential direction substantially entirely about the central longitudinal axis, in order to seal the opening of the can.

According to some aspects of the method, the step of forming the plurality of first welding portions may include directing a laser on an area between a radially inner surface of the sidewall and a radially outer surface of the edge of the cap. According to some further of such aspects, the step of forming the second welding portion may include using a laser to continuously irradiate an area along a radially inner surface of the sidewall and a radially outer surface of the edge of the cap. According to yet further of such aspects, a power or energy density of the laser irradiation in forming the plurality of first welding portions may be higher than a respective power or energy density of the laser irradiation in forming the second welding portion. According to some even further aspects of the disclosure, a speed of the laser in moving along the circumferential direction to form the plurality of first welding portions may be faster than that of the laser in forming the second welding portion.

According to some aspects of the method, the step of forming the second welding portion may include resistance welding utilizing a roller electrode.

According to some other aspects of the method, the steps of forming the plurality of first welding portions and forming the second welding portion may include melting a material of an extension of the sidewall that projects above the cap along an axial direction, the axial direction extending parallel to the central longitudinal axis. As a result, the material of the extension preferably flows between a radially inner surface of the sidewall and a radially outer surface of the edge of the cap.

### BRIEF DESCRIPTION OF DRAWINGS

FIG. 1 is a perspective view of a cylindrical battery cell according to an aspect of the present disclosure.
FIG. 2 is an exploded perspective view of the electrode assembly before it is wound and accommodated in the can of FIG. 1.
FIG. 3 is a perspective view of the electrode assembly of FIG. 2 in a laminated state before winding.
FIG. 4 is a perspective view of a cylindrical jelly-roll shaped electrode assembly assembled by winding the laminate of FIG. 3.
FIG. 5 is a perspective view illustrating a first current collector plate bonded to the electrode tabs of a first electrode of the electrode assembly of FIG. 4.
FIG. 6 is a perspective view illustrating a second current collector plate bonded to the electrode tabs of a second electrode of the electrode assembly of FIG. 4.
FIG. 7 is a side cross-sectional view illustrating a process of positioning into the can the electrode assembly to which the first and second current collector plates are bonded.
FIG. 8 is a side cross-sectional view illustrating a process of bonding the first current collector plate and a first electrode terminal of the electrode assembly accommodated in the can.
FIG. 9 is a side cross-sectional view illustrating a process of positioning a cap so as to cover the open end of the can that contains the electrode assembly therein.
FIG. 10 is an enlarged side cross-sectional view of the open end of the can covered with the cap subjected to a laser welding process.
FIG. 11 is an enlarged cross-sectional view of open end of the can covered with a cap subjected to a resistance welding process.
FIG. 12 is a cross-sectional view of the open end of the can covered with a cap having a liquid injection port.
FIG. 13 is a cross-sectional view illustrating the liquid injection port of the cap of FIG. 12 closed with a stopper.
FIG. 14 is a perspective view of the open end of the can with a cap.
FIG. 15 is an enlarged cross-sectional view along the line .15.--.15. in FIG. 14.
FIG. 16 is a plan view illustrating the first welding portion formed between the can and cap of FIG. 14.
FIG. 17 is an enlarged cross-sectional view of along the line .17.--.17. of FIG. 16.
FIG. 18 is a plan view illustrating the second welding portion formed between the can and cap of FIG. 16.
FIG. 19 is an enlarged cross-sectional view along the line .19.--.19. of FIG. 18.
FIG. 20 is an enlarged cross-sectional view along the line .20.--.20. of FIG. 18.
FIG. 21 is a perspective view of the open end of the can with a cap according to a second aspect of the disclosure.
FIG. 22 is an enlarged cross-sectional view along the line .22.--.22. of FIG. 21.
FIG. 23 is a perspective view illustrating the first welding portion formed between the can and cap of FIG. 21.
FIG. 24 is a perspective view illustrating the second welding portion formed between the can and cap of FIG. 23.
FIG. 25 is a photograph of a cut section of a battery cell cut along line .25.--.25. of FIG. 24.
FIG. 26 is a photograph of a cut section of a battery cell cut along line .26.--.26. of FIG. 24.
FIG. 27 is a plan view of the cap of the cylindrical battery cell according to a third aspect of the disclosure.
FIG. 28 is a plan view of the open end of the can of the cylindrical battery cell with the cap of FIG. 27.
FIG. 29 is a flowchart illustrating an example of a manufacturing process of a battery cell according to the present disclosure.
FIG. 30 is a flowchart illustrating another example of a manufacturing process of a battery cell according to the present disclosure.
FIG. 31 is a perspective view of a battery pack including a plurality of battery cells according to aspects of the disclosure.
FIG. 32 is a diagram of a car equipped with the battery pack of FIG. 31.

### DETAILED DESCRIPTION

The above-described objects, features and advantages will be described in detail hereinafter with reference to the accompanying drawings such that those skilled in the art will be able to implement the technical idea of the present disclosure. In describing the present disclosure, when it is determined that a detailed description of prior art related to the present disclosure unnecessarily obscures the gist of the present disclosure, the detailed description thereof will be omitted. Hereinafter, aspects of the present disclosure will be described in detail with reference to the accompanying drawings. In the drawings, identical reference numerals are used for indicating identical or similar components.

While "first", "second", etc. are used to describe various elements, these elements are not limited by these terms. Rather, such terms are only used to distinguish one element from another, and, unless specifically stated otherwise, a component identified as a first element may also be a second element, and vice versa.

Throughout the specification, unless stated otherwise, each element may be singular or plural.

Hereinafter, "arranging an element at upper portion (or lower portion) of a component" or "arranging an element at top (or bottom) of a component" refers not only to arranging the element so as to be in contact with an upper surface (or lower surface) of the component but also to arranging the element above the upper surface (or below the lower surface) with another element interposed therebetween.

Additionally, when an element is described as being "connected to," "coupled with," or "in contact with" a component, it should be understood that the element may be directly connected to, directly coupled with, or directly in contact with the component, or the element may be connected to, coupled with, or in contact with the component with one or more other elements interposed therebetween.

The expressions in singular form herein include expressions in plural form unless the context explicitly dictates otherwise.

Throughout the specification, "A and/or B" refers to A, B, or A and B unless specifically stated otherwise, and "C to D" is inclusive of both endpoints and all intervening values.

In the description of the embodiments, "axial direction" refers to the direction in which the central longitudinal axis constituting the winding center of the jelly-roll type electrode assembly extends, *i.e.,* the direction parallel to the central longitudinal axis, whereas "radial direction" refers to a direction toward (centripetal) or away (centrifugal) from the axis, and circumferential direction refers to a direction surrounding the axis.

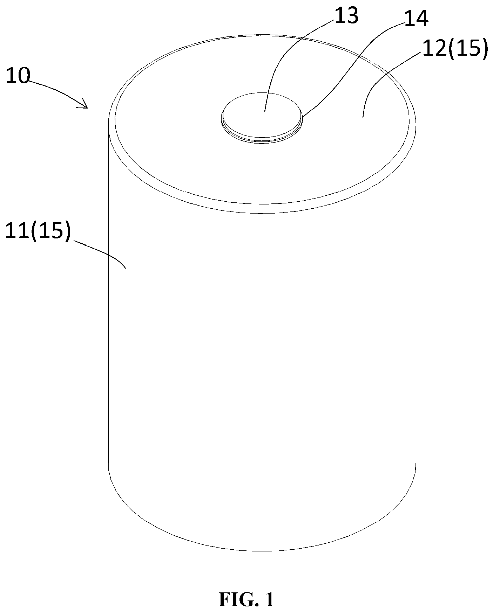

Hereinafter, a first aspect of a battery cell to which a welding structure of the present disclosure is applied will be described in detail with reference to FIGS. 1 to 20.

A battery cell of this aspect of the disclosure may be, for example, a cylindrical battery cell whose form factor ratio (defined as the diameter of the cylindrical battery cell divided by the height, that is, the ratio of the diameter Φ to the height H) is greater than approximately 0.4.

The form factor refers to values representing the diameter and the height of a cylindrical battery cell. The cylindrical battery cell may be, for example, a 46110 cell, a 48750 cell, a 48110 cell, a 48800 cell or a 46800 cell. In the values representing the form factor, the first two numbers represent the diameter of the cell, the next two numbers represent the height of the cell, and the last number 0 represents that the cross-section of the cell is circular.

The battery cell may be a cell that is approximately cylindrical with a diameter of approximately 46 mm, a height of approximately 110 mm and a form factor ratio of 0.418.

A battery cell according to another aspect may be a cell that is approximately cylindrical with a diameter of approximately 48 mm, a height of approximately 75 mm and a form factor ratio of 0.640.

A battery cell according to yet another aspect may be a cell that is approximately cylindrical with a diameter of approximately 48 mm, a height of approximately 110 mm and a form factor ratio of 0.418.

A battery cell according to yet another aspect may be a cell that is approximately cylindrical with a diameter of approximately 48 mm, a height of approximately 80 mm and a form factor ratio of 0.600.

A battery cell according to another aspect may be a cell that is approximately cylindrical with a diameter of approximately 46 mm, a height of approximately 80 mm and a form factor ratio of 0.575.

The present disclosure may be applied in the context of battery cells with a form factor ratio of approximately 0.4 or less, for example, 18650 cells, 21700 cells, etc. For an 18650 cell, its diameter is approximately 18 mm, its height is approximately 65 mm, and the form factor ratio is 0.277. For a 21700 cell, its diameter is approximately 21 mm, its height is approximately 70 mm, and the form factor ratio is 0.300.

The battery cell of the present disclosure includes an electrode assembly 20, current collector plates 31 and 32 electrically connected to the electrode assembly 20, and a can 10 accommodating the electrode assembly 20 and the current collector plates 31 and 32 therein.

The can 10 includes a bottom member 12, a sidewall member 11 connected to the bottom member 12 and extending in an axial direction, a cap 16 covering an open end provided at one axial end of the sidewall member 11, *i.e.,* the upper end 30 (or "first end") of the sidewall member 11.

The bottom member 12 may have a disk shape with a hole provided in the center thereof, and the sidewall member 11 may have a circular tubular shape that circumscribes an internal volume of the can 10.

The bottom member 12 and the sidewall member 11 may be manufactured by performing a deep drawing process on a metal sheet having a nickel-plated steel surface (although the material is not limited thereto), and then trimming the sidewall member 11 with a punch while holding the front end of the sidewall member with a blank holder.

A first electrode terminal 13 may be fitted into and coupled to the hole. The first electrode terminal 13 may be riveted and fixed to the bottom member 12 with a gasket 14 interposed therebetween. Specifically, the gasket 14 is interposed between the first electrode terminal 13 and the bottom member 12 to seal the inside and outside of the can 10, thereby preventing electrolyte leakage and electrically insulating the first electrode terminal 13 from the bottom member 12.

However, the connection method between the first electrode terminal 13 and the bottom member 12 is not limited thereto. For example, if the resulting structures are capable of creating a seal between the first electrode terminal 13 and the bottom member 12 and also electrically insulating the first electrode terminal 13 from the bottom member 12, then various other fixing methods may be used, such as a bolt-and-nut coupling method, a glass seal method, or a chrome coating-and-PP-MAH (maleic anhydride grafted polypropylene or maleated polypropylene) heat bonding method.

The first electrode terminal 13 may have a first polarity, and the can 10 may have a second polarity. That is, the bottom member 12 of the can 10, the sidewall member 11 connected thereto, and the cap 16 (to be described later) connected to the sidewall member 11 may all have the second polarity.

Accordingly, the battery cell may have both the first electrode terminal 13 and the second electrode terminal 15 disposed at the axial end where the bottom member 12 is provided, that is, at the closed end of the can 10. As a result, the battery cell may have a busbar connected to the first electrode terminal 13 and another busbar connected to the second electrode terminal 15, with both busbars being located at the top of the battery cell.

In one example, the first electrode terminal 13 may be a cathode terminal, and the second electrode terminal 15 may be an anode terminal, although they may be reversed in a different example.

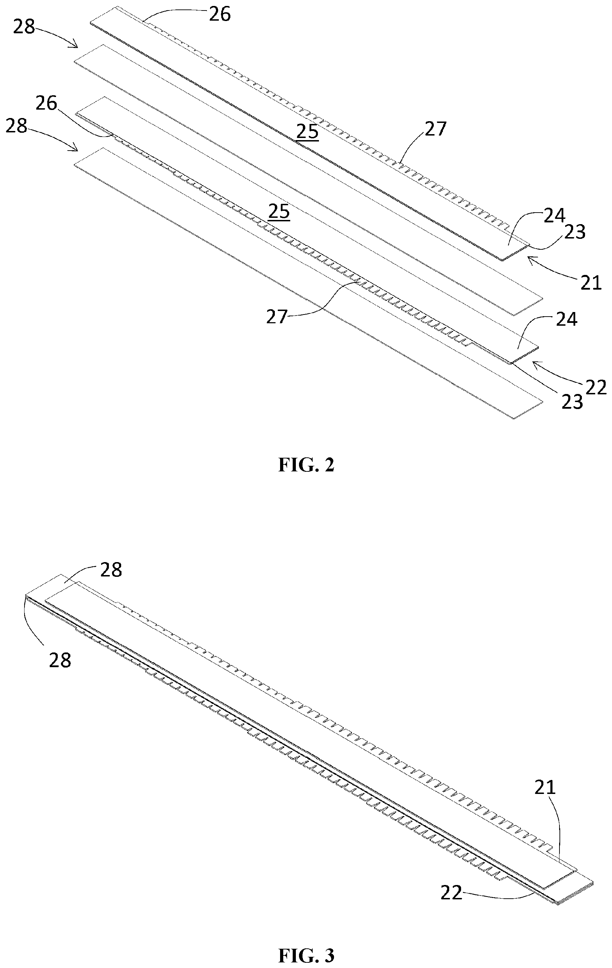

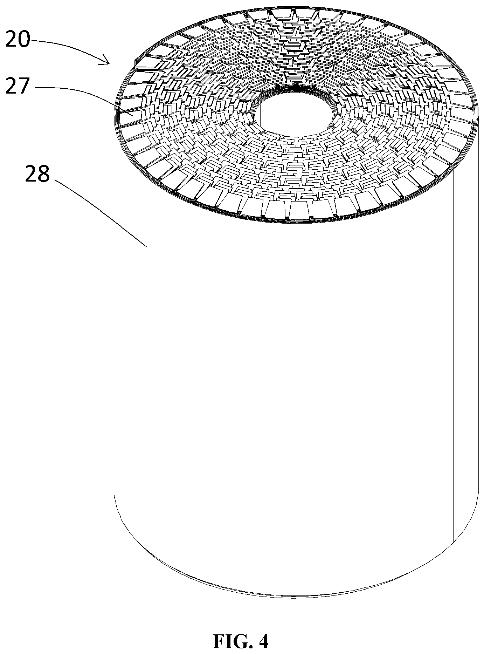

The electrode assembly 20 is received within the internal volume of the can 10. The electrode assembly 20 is manufactured by preparing a first electrode 21, a second electrode 22 and separators 28 extending in a lengthwise direction with a predetermined width as shown in FIG. 2, and then forming a laminate by sequentially stacking the first electrode 21, the separator 28, the second electrode 22, and the separator 28, as shown in FIG. 3, after which the laminate is coiled to have a shape of a jelly-roll wound around the core axis as shown in FIG. 4.

The first electrode 21 may be a cathode, and the second electrode 22 may be an anode. However, they may be reversed.

The first electrode 21 and the second electrode 22 are manufactured in the form of a sheet. The electrode sheet is manufactured by applying an active material layer 24 to the surface of a metal foil 23. The electrode sheet includes a coated area 25 where the active material layer 24 is applied and a non-coated area 26 where the active material layer 24 is not applied. The cathode sheet is provided with a non-coated area 26 on one side in the widthwise direction, and the anode sheet is provided with a non-coated area 26 on the other side in the widthwise direction.

The first electrode 21 and the second electrode 22 are arranged in the laminate such that their non-coated areas 26 are exposed or protruding from the laminate in the widthwise direction, with the noncoated area 26 of the first electrode 21 protruding at one axial end of the wound jelly-roll and the non-coated area 26 of the second electrode 22 protruding at the opposite axial end of the jelly-roll. The non-coated area 26 itself functions as at least one electrode tab 27.

Notches may be formed at predetermined intervals along the non-coated area 26 so as to define notched tabs 27.

The notched tabs 27 may each be shaped in the form of a flag. In the illustrated aspect, the notched tabs 27 have the shape of an equilateral trapezoid. However, the notched tabs 27 may have various shapes such as semicircular, semielliptical, triangular, rectangular, parallelogram, etc. Additionally, in the illustrated aspect, the notched tabs 27 each have the same width along the lengthwise direction of the electrodes. However, in another aspect, the width of the notched tabs along the lengthwise direction may gradually widen from the core side to the outer circumferential side.

In addition, as illustrated in FIGS. 2 and 3, the height of the notched tabs 27 gradually increases from the core side to the outer circumferential side. However, in alternative aspects, the height of the notched tabs may be constant or may gradually decrease.

In addition, according to this aspect, the notched tabs 27 may be removed or absent from the non-coated area 26 at both opposing ends of the first and second electrodes 21, 22 in the lengthwise direction. However, in some aspects, the notched tabs may not be removed from either end, or they may only be removed from the non-coated area at the radially inner end or the radially outer end when the electrode assembly 20 is wound into the jelly-roll configuration.

In the jelly-roll shaped electrode assembly 20, the notched tabs 27 may be bent in a radial direction and flattened, as shown in FIG. 4. That is, the notched tabs 27 may be bent inward or outward in the radial direction. Although, according to aspects of the disclosure, the notched tabs 27 are bent inward in the radial direction as illustrated.

The notched tabs 27 may be bent one by one in the process of winding the laminate to form the jelly-roll shaped electrode assembly 20. Alternatively, the notched tabs 27 may be formed by bending the same all at once after the laminate has been wound to form the jelly-roll shaped electrode assembly.

The notched tabs 27 of the first electrode 21 and the notched tabs 27 of the second electrode 22, which are bent and overlap with one another in the radial direction, may provide a plane substantially perpendicular to the axial direction at each of both opposing axial ends of the electrode assembly 20.

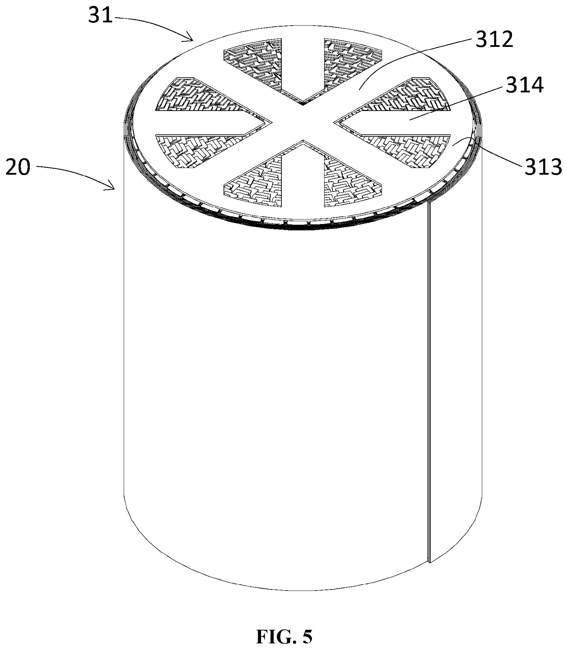

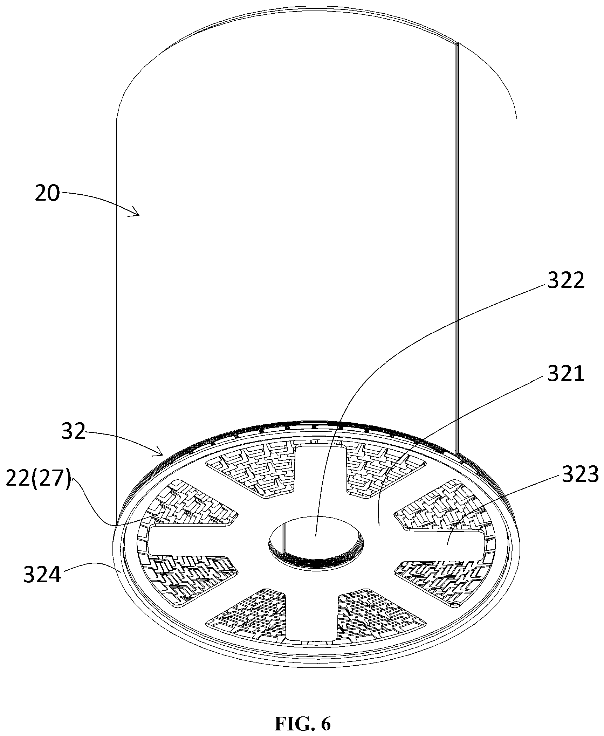

A first current collector plate 31 and a second current collector plate may be bonded to the substantially flat surface provided by the bent notched tabs 27 exposed at the both axial ends of the electrode assembly 20, as shown in FIGS. 5 and 6.

In one aspect, the first current collector plate 31 is a cathode current collector plate, and the second current collector plate 32 is an anode current collector plate. The first current collector plate 31 may be made of aluminum, and the second current collector plate 32 may be made of copper. The current collector plates 31 and 32 may be manufactured by punching, trimming, piercing, and/or bending a metal sheet.

Referring to FIG. 5, the first current collector plate 31 includes a terminal connecting part 312 extending radially outwardly from the center, a ring part 313 connecting the radially outer end of the terminal connecting part 312 and extending in the circumferential direction, and an electrode connecting part 314 extending radially inwardly from the ring part 313 without being connected to the terminal connecting part 312. The center of the terminal connecting part 312 covers at least a portion of the core hollow portion along the central longitudinal axis of the electrode assembly 20.

The electrode connecting part 314 is bonded to the notched tabs 27 of the first electrode 21 of the electrode assembly 20 using a method such as laser welding before the electrode assembly 20 is inserted into the can 10. The welding line of the laser may extend radially.

Referring to FIG. 6, the second current collector plate 32 defines a hole 322 corresponding to the core hollow portion of the electrode assembly 20. The second current collector plate 32 includes an inner ring part 321 surrounding the core hollow portion and an electrode tab connecting part 323 extending radially from the inner ring part 321. The electrode tab connecting part 323 may be in the form of a plurality of spokes extending radially outwardly from the inner ring part, where one or more of the spokes have radially outer ends connected to a peripheral portion of the current collector plate 32 referred to as a can connecting part 324. Moreover, one or more of the spokes of the electrode tab connecting part 323 may have radially outer ends that do not reach the can connecting part 324. The can connecting part 324 has an outer ring shape encircling the electrode tab connecting part 323, and the can connecting part 324 may include a step away from the electrode assembly 20 in the axial direction, such that at least an outermost periphery of the can connecting part 324 is spaced further away from the electrode assembly 20 than the other portions of the can connecting part 324, including the electrode tab connecting part 323 and the inner ring part 321.

The electrode tab connecting part 323 is bonded to the notched tabs 27 of the second electrode 22 of the electrode assembly 20 by laser welding, etc., before the electrode assembly 20 is inserted into the can 10. The welding line of the laser may extend radially.

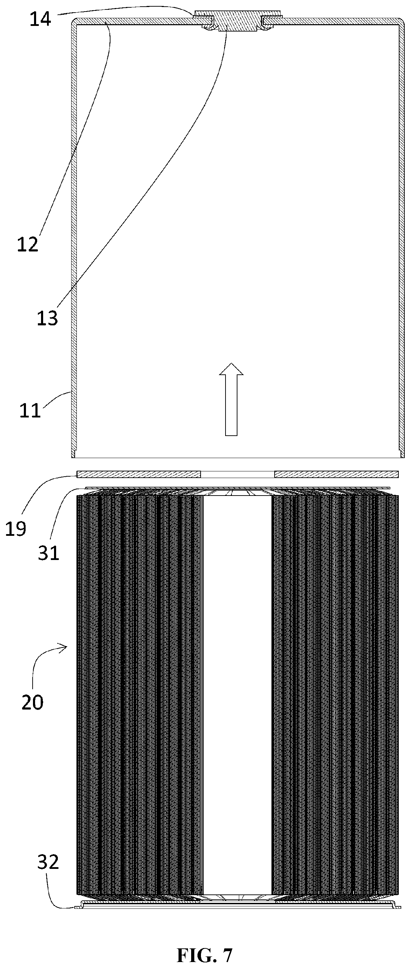

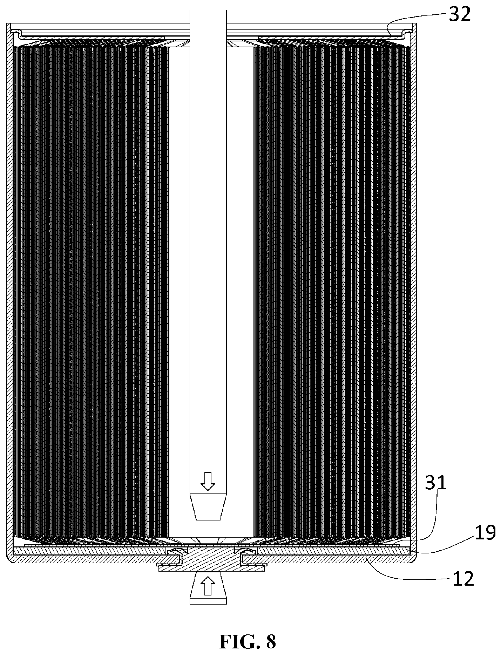

As shown in FIGS. 7 and 8, the electrode assembly 20 is accommodated in the can 10 with the first current collector plate 31 aligned to face the bottom member 12 of the can 10. An insulator 19 is interposed between the first current collector plate 31 and the bottom member 12 of the can 10 to electrically insulate the first current collector plate 31 from the bottom member 12.

The terminal connecting part 312 of the first current collector plate 31 is bonded to the first electrode terminal 13 by resistance welding, ultrasonic welding, laser welding, or the like. A welding device for welding the first current collector plate 31 and the first electrode terminal 13 may perform welding by accessing the inner side of the center of the terminal connecting part 312 of the first current collector plate 31 (*i.e.,* the side of the terminal connecting part 312 facing the electrode assembly 20). Specifically, the welding device may access that location of the first current collector plate 31 from the open end of the can 10 through the core hollow part of the electrode assembly 20, as shown in FIG. 8. As an alternative to the above-described welding method, the first current collector plate 31 and the first electrode terminal 13 may be bonded to one another by brazing or soldering. That is, various bonding methods may be utilized, as long as the first current collector plate 31 and the first electrode terminal 13 are both fixed to and electrically connected to each other.

With the electrode assembly 20 accommodated inside the can 10, the electrode tabs 27 of the second electrode 22 and the second current collector plate 32 will be arranged to face the open end of the sidewall member 11.

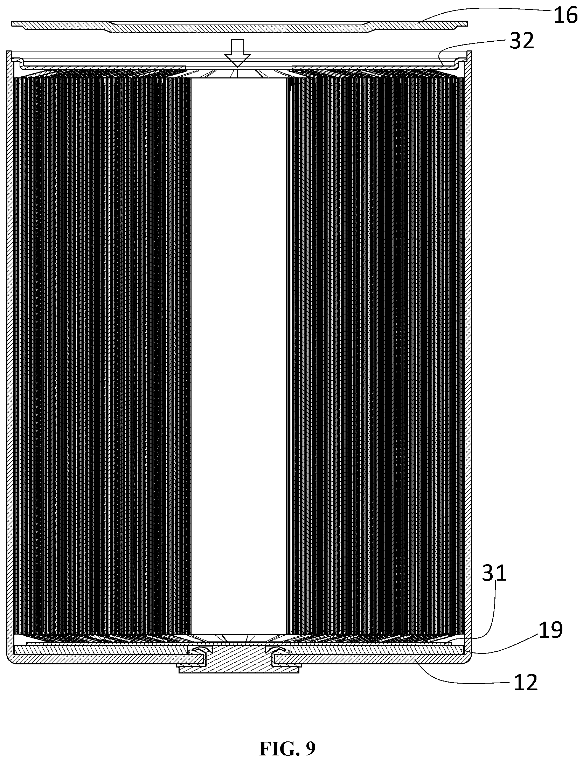

After the first current collector plate 31 and the first electrode terminal 13 are bonded, the electrolyte solution may be injected into the can 10. After injecting the electrolyte solution, the open end of the sidewall member 11 may be covered and closed with a cap 16, as shown in FIG. 9. Due to the connection between the bottom member 12 and the sidewall member 11 of the can 10, covering the open end with the cap 16 thus encloses the internal volume of the can 10.

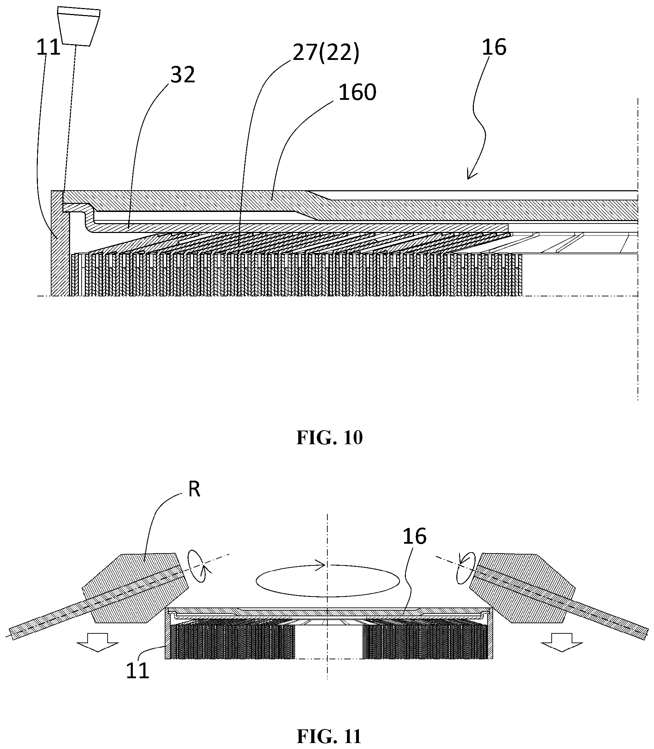

As shown in FIG. 10, the edge of the cap 16 is bonded to the edge of the sidewall member 11 by seam welding with a laser, so that the can 10 may thus be sealed.

In addition to above-described methods, bonding is also possible by resistance seam welding, such as by using a roller electrode R, as shown in FIG. 11. The roller electrode R may have a tapered shape. The method involves rotating the can 10 with the circumferential surface of the roller electrode R in contact with the upper end 30 of the sidewall member 11, and the roller electrode R also rotates in conjunction with the rotation of the can 10. By applying positive voltage to one of the two electrodes and negative voltage to the other during the rotation, current desirably flows such that resistance heat may be generated at the contact areas between the sidewall member 11 and cap 16 adjacent to the electrode R. As a result, welding may occur at those contact areas.

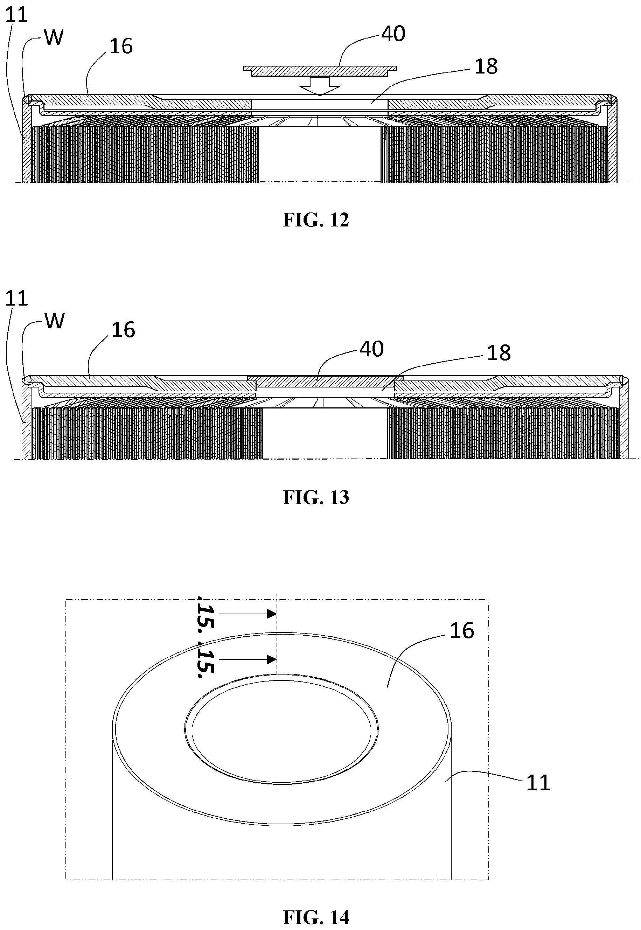

The welding structure and methodology of the present disclosure may be utilized in conjunction with a method in which an electrolyte solution is injected into the can 10 through the liquid injection port 18 after first covering the open end of the can 10 with the cap 16 and then welding (W) the sidewall member 11 as shown in FIG. 12, after which the liquid injection port 18 of the cap 16 is closed with a stopper 40 as shown in FIG. 13. The liquid injection port 18 may have a shape of a circular hole provided in the center of the cap 16, and the stopper 40 may be circular lid including a surface part and an insertion portion, where the surface part has a larger diameter than the liquid injection port 18 and the insertion portion protrudes from the surface portion so as to fit into the liquid injection port 18. The outer circumference of the stopper 40 is welded to the cap 16, and thus the liquid injection port 18 may be sealed. The bonding method between the stopper 40 and the cap 16 is not limited to welding, however, as various bonding methods capable of sealing may be utilized, such as soldering, O-ring compression, and screw fastening.

Referring to FIGS. 10, 14, and 15, an inner diameter expansion part 113 may be provided at the open end of the sidewall member 11. The inner diameter expansion part 113 may be in the form of a lateral step extending transverse to the central longitudinal axis and positioned along the radially inner surface of the sidewall member 11. Accordingly, the radially inner surface of the sidewall member 11 may include a first inner surface 111 positioned axially below *(i.e.,* further from the opening at the open end of the sidewall member 11 than) the inner diameter expansion part 113, and a second inner surface 115 provided axially outer than the inner diameter expansion part 113. The second inner surface 115 may have a larger inner diameter than the first inner surface 111. Accordingly, a second thickness t2 of the sidewall member 11 measured in the radial direction at a portion where the second inner surface 115 is located is smaller than a first thickness t1 of the sidewall member 11 at a portion where the first inner surface 111 is located.

The can connecting part 324 provided at the edge of the second current collector plate 32 and electrically connected to the can 10 includes a first portion in contact with the second inner surface 115 of the sidewall member 11. In the first portion, a circumferential contacting surface 325 is provided that faces and is in contact with the second inner surface 115 of the sidewall member 11 in the radial direction.

The can connecting part 324 includes a second portion in contact with the cap 16. In the second portion, a cap contacting surface 326 is provided that faces and is in contact with the inner surface of the cap 16 in the axial direction, *i.e.,* the underside of the cap 16.

The diameter of the circumferential contacting surface 325 of the can connecting part 324 is set to be larger than the inner diameter of the first inner surface 111. Accordingly, the can connecting part 324 includes a third portion in contact with the inner diameter expansion part 113. The third portion is positioned on the opposite side of the cap contacting surface 326 in the axial direction. The third portion is in contact with the inner diameter expansion part 113 and thereby constrains the insertion depth of the second current collector plate 32 into the can 10.

The second current collector plate 32 further includes a first bent part 327 and a second bent part 328 thus defining a step in the axial direction. The first bent part 327 provides a shape in which the second current collector plate 32 extending outward in the radial direction is bent upward in the axial direction. The second bent part 328 provides a shape in which that upwardly bent portion of the second current collector plate 32 is bent back outward in the radial direction. As a result of that axial step between the first bent part 327 and the second bent part 328, the peripheral portion (or can connecting part 324) of the current collector plate 32 is offset in the axial direction towards the open end of the can 10 relative to a central portion of the current collector plate 32. The can connecting part 324 is connected to the electrode tab connecting part 323 through the first bent part 327 and the second bent part 328, and through the inner ring part 321 described above. The can connecting part 324 is connected to the outer side of the second bent part 328 in the radial direction and extends from the second bent part 328 outwardly in the radial direction, thus providing the cap contacting surface 326 of the second current collector plate 32.

The material of the second current collector plate 32 is desirably softer than that of the sidewall member 11, and therefore the first bent part 327 and the second bent part 328 are elastically deformed in the process of inserting the second current collector plate 32 into the open end of the sidewall member 11. Accordingly, the circumferential contacting surface 325 is press-fitted into the second inner surface 115 when the outer diameter of the circumferential contacting surface 325 is set to be slightly larger than the inner diameter of the second inner surface 115.

The cap 16 includes, sequentially from the center towards the outer side in the radial direction: a cap body 160, a thickness reduction part 161 (where the thickness of the cap changes), and a joint 17. That is, the cap body 160 is centered in a central region of the cap 16 and the thickness reduction part 161 is provided around the outer side of the cap body 160 in the radial direction. The joint 17 is positioned along a radially outer side of the thickness reduction part 161 so as to define an annular region of the cap 16 having a reduced thickness relative to the cap body 160. That is, a third thickness t3 of the joint 17, when measured in the axial direction, is smaller than a fourth thickness t4 of the cap body 160 measured in the axial direction.

An outer circumferential bonding surface 171 that faces the second inner surface 115 of the sidewall member 11 in the radial direction is provided along a radially outer surface of the cap 16, and specifically along the radially outer surface of the joint 17. According to the first aspect of the present disclosure, the outer circumferential bonding surface 171 is in contact with the second inner surface 115 of the sidewall member 11. In addition, the underside of the cap 16 along the joint 17 includes a current collector plate contacting surface 173 facing downwardly in the axial direction so as to contact the cap contacting surface 326 of the can connecting part 324 of the second current collector plate 32.

The location of the thickness reduction part 161 is selected such that at least a portion of the thickness reduction part 161 contacts the second current collector plate 32. Such contact beneficially achieves the effect of aligning the center of the cap 16 with respect to the second current collector plate 32 and the central longitudinal axis as the thickness reduction part 161 of the cap 16 comes in contact with the second current collector plate 32 in the process of inserting the cap 16 into the open end of the sidewall member 11. In the illustrated first aspect, the alignment effect can be achieved by placing the thickness reduction part 161 at a position corresponding to the position where the second bent part 328 of the second current collector plate 32 is formed in the radial direction. In order to increase the alignment effect, the thickness reduction part 161 desirably had the form of an inclined surface extending upward in the axial direction as it approaches the outer side in the radial direction. In addition, in order to increase the alignment effect, an inclined surface shape is desirably provided on the second current collector plate 32 by means of the surface shape of the second bent part 328 of the second current collector plate 32.

The outer circumferential bonding surface 171 of the cap 16 and the circumferential contacting surface 325 of the second current collector plate 32 are each in contact with the second inner surface 115 of the sidewall member 11 in the radial direction. Additionally, in the axial direction, at least a portion of the underside of the second current collector plate 32 along its peripheral portion is in contact with the inner diameter expansion part 113 of the sidewall member 11. The cap contacting surface 326 provided on the upper side of the second current collector plate 32 is in contact with the current collector plate contacting surface 173 provided on the underside of the joint 17 of the cap 16.

With the second current collector plate 32 and the cap 16 inserted, the position of the upper end 30 of the sidewall member 11 in the axial direction may correspond to that of the upper surface of the cap 16.

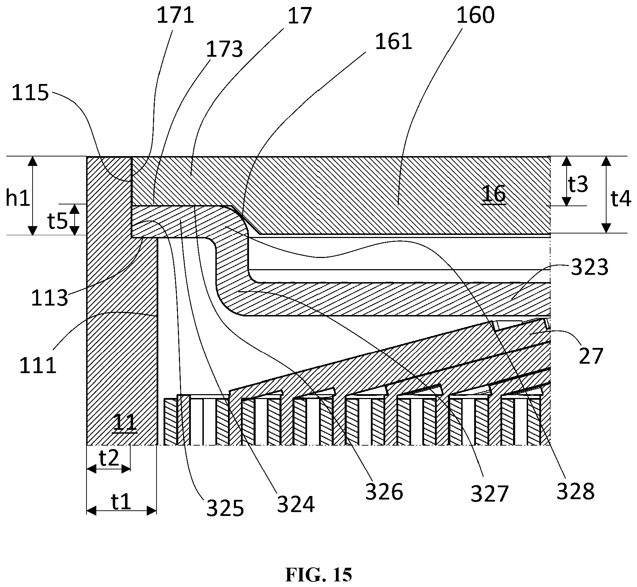

As illustrated in FIG. 15, a first height h1 of the region extending upward from the inner diameter expansion part 113 may correspond to the sum of the third thickness t3 of the joint 17 of the cap 16 and the fifth thickness t5 of the can connecting part 324 of the second current collector plate 32.

As shown, the upper axial ends of the outer circumferential bonding surface 171 of the cap 16 and the radially inner surface of the sidewall member 11, which are in contact with each other in the radial direction, are exposed along the outside of the battery cell.

The cap 16 may be welded to the can 10 by a laser irradiated from outside of the battery cell in the axial direction and oriented toward the axial ends of the outer circumferential bonding surface 171 of the cap 16 and the second inner surface 115 of the sidewall member 11.

Since the circumferential contacting surface 325 of the second current collector plate 32 is disposed axially below the cap 16 and is in contact with the radially inner surface of the sidewall member 11, it is possible to prevent the laser from irradiating into the internal volume of the can through any gap that may exist between the sidewall member 11and the cap 16. In addition, the inner diameter expansion part 113 of the sidewall member 11 also prevents the laser from irradiating and penetrating through a gap between the sidewall member 11 and the cap 16 or between the sidewall member 11 and the second current collector plate 32.

The second current collector plate 32 may be made of a material with higher thermal conductivity than the sidewall member 11. In addition, the second current collector plate 32 is in contact with the sidewall member 11. Therefore, when the welding heat generated in the sidewall member 11 by the laser is conducted along the axial direction of the sidewall member 11, the welding heat is dispersed to and across the top of the electrode assembly 20 through the second current collector plate 32, such that damage to the separator caused by the welding heat may be prevented.

The second current collector plate 32 is also in contact with the cap 16. Accordingly, the heat generated in the cap 16 by laser welding or resistance welding is dispersed and transferred through the second current collector plate 32. As a result, the sidewall member 11 may be heated first and then melted when the contacting area between the cap 16 and the sidewall member 11 is heated with laser.

Therefore, when the sidewall member 11 is too thin, the sidewall member 11 may melt before the cap 16, and welding may not be performed smoothly. Accordingly, the second thickness t2 of the sidewall member 11 is preferably 0.25 mm or more. For example, the second thickness t2 may be 0.35 mm.

It is also important that the cap 16 has sufficient strength to endure anticipated increases in the inner pressure within the can 10. When the cap 16 is too thin, too much bulging may occur, in which the cap 16 swells into a spherical surface profile under high internal pressure within the can 10, thereby deteriorating the durability of the battery cell. In order to resist such bulging deformation, it is important for the cap 16 to have a certain thickness. On the other hand, when the thickness of the cap 16 is too thick relative to the sidewall member 11, only the sidewall member 11 may initially melt during laser welding, thereby greatly impairing the welding process. Additionally, as the thickness of the cap 16 increases, the axial length of the outer circumferential bonding surface 171 of the cap 16 where welding may be performed also increases. Additionally, in order to ensure the durability of the can 10, it is preferable that the entire section of the outer circumferential bonding surface 171 of the cap 16 in the axial direction be welded.

The illustrated aspect involves a structure in which the third thickness t3 of the joint 17 that is welded to the sidewall member 11 is different from the fourth thickness t4 of the cap body 160. The thicker the fourth thickness t4, the higher the resistance against bulging, but the inner space of the can it occupies also increases. To increase resistance against bulging while minimizing space occupancy and weight, the fourth thickness t4 is preferably as small as possible within a range of required bulging resistance.

As a result, the fourth thickness t4 of the cap body 160, which occupies the majority of the cap 16, is desirably larger than the third thickness t3 so as to minimize deformation of the cap 16 due to internal pressure within the can 10, while also minimizing the thickness of the welding portion along the axial dimension so as to ensure that the welding portion W is formed along the entire axial dimension of the outer circumferential bonding surface 171, thereby increasing the strength of the cap 16 itself and also the bonding strength of the cap 16 to the sidewall member 11. The ratio of the third thickness t3 to the fourth thickness t4 is preferably 0.4 to 0.8, and more preferably 0.5 to 0.75. When the ratio is less than the range, the cap body 160 becomes excessively thick without increasing bulging resistance and/or the strength of the welding portion becomes insufficient. When the ratio is more than the range, the bulging resistance of the cap body 160 becomes insufficient and/or it becomes difficult for the outer circumferential bonding surface 171 of the cap 16 to be welded along the entirety of its axial direction.

According to the illustrated aspect, the thickness reduction part 161 may be positioned in the radial direction as close to the welding area as possible, such that a maximal area of the cap body 160 that resists bulging may be obtained. In addition, by selecting the position of the thickness reduction part 161, a guide function for aligning the center of the cap 16 while being in contact with the second current collector plate 32 may also be provided.

The third thickness t3 of the joint 17 of the cap 16 may be set to be larger than the second thickness t2 of the sidewall member 11. The third thickness t3 may be between one and two times the second thickness t2. For example, where the second thickness t2 is 0.35 mm, the third thickness t3 may be 0.5 mm or in a range from 0.5 mm to 0.7 mm.

When the third thickness t3 is more than twice the second thickness t2, there is a risk that the sidewall member 11 may be excessively melted before the cap 16 is melted during the process of forming the welding portion. In addition, when the third thickness t3 is more than twice the second thickness t2, there is a risk that the welding portion will not be formed along the entirety of the outer circumferential bonding surface 171 of the cap 16 in the axial direction.

When the third thickness t3 is less than the second thickness t2, that is, when the second thickness t2 is greater than the third thickness t3, it may be difficult to ensure the strength of the edge area of the cap 16. It may also be difficult to provide a sufficient lateral step dimension of the inner diameter expansion part 113 of the sidewall member 11 without making the overall thickness t1 of the sidewall member 11 excessively large.

The process of welding the cap 16 and the second current collector plate 32 to the open end of the sidewall member 11 may be accomplished in two steps, resulting in a battery cell in accordance with a first aspect of the disclosure that includes a first welding portion W1 and a second welding portion W2.

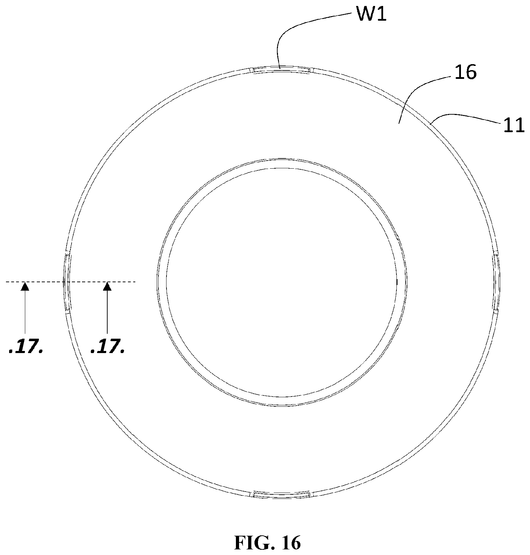

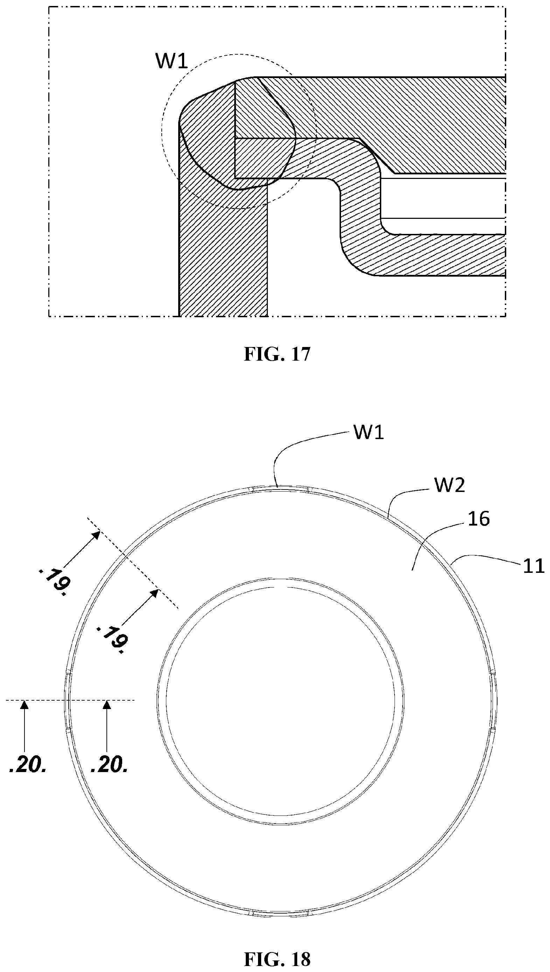

First, with the cap 16 inserted into the open end of the sidewall member 11 as shown in FIG. 15, tack welding may be performed to fix the position of the cap 16 with respect to the sidewall member 11 as shown in FIGS. 16 and 17. The tack welding process desirably results in the formation of the first welding portion W1 at a plurality of locations spaced apart along the circumferential directions of the outer circumferential bonding surface 171 of the cap 16 and the second inner surface 115 of the sidewall member 11.

The first welding portion W1 may be a portion where the sidewall member 11, the cap 16, and the second current collector plate 32 are fused together. That is, unlike a general tack welding process, which may be utilized as the main welding process herein, the tack welding process of the first aspect temporarily fixes the position of the cap 16 before the main welding is performed. In addition, the tack welding process of the first aspect also allows for the of omission of a process in which the second current collector plate 32 is separately welded to the sidewall member 11 before covering the open end of the sidewall member 11 with the cap 16, since the cap 16, the sidewall member 11, and the second current collector plate 32 are simultaneously welded.

The first welding portion W1 may be positioned at equal intervals along the circumferential direction. In order to secure the position of the cap 16 with respect to the sidewall member 11, and to reduce the internal resistance by obtaining the desired cross-sectional area of the bond between the second current collector plate 32 and the can 10, the first welding portion W1 may be provided in three or more locations. Preferably, the first welding portion W1 may be provided at four locations.

The first welding portion W1 may be formed by spot welding method in which a laser is pointed at a particular region, rather than scanning as is done in conventional tack welding. However, in order to ensure that not only the sidewall member 11 and the cap 16 are melted, but also that the can connecting part 324 of the second current collector plate 32 is melted and bonded, the first welding portion W1 may be formed using a scan welding method in which the laser is scanned a predetermined distance along the circumferential direction. Such scanning distance of the laser to form the first welding portion W1 may be between 0.5mm and 5mm. Preferably, the scanning distance may be 4mm. When the scanning distance is less than 0.5 mm, it may be difficult to ensure reliable melting of the second current collector plate 32. On the other hand, when the scanning distance is more than 5 mm, excessive welding heat may be generated, which may lead to heat damage to the separator 28 of the electrode assembly 20.

The first welding portion W1 of the first aspect may be formed by scan welding using a laser having a higher output than a laser used for general tack welding that uses spot welding.

The output of the laser may be adjusted by adjusting the focal distance of the laser, so as to adjust the size of the irradiated area. For example, even when the outputs of the laser oscillator are the same, the output per unit area may be higher for a smaller irradiated area, resulting in a higher energy density. On the other hand, the output per unit area may be lower for a larger irradiated area, resulting in lower energy density.

As an example, the first welding portion may be formed by reducing the size of the irradiated area so as to have high energy density (output per unit area). The scanning speed of the laser for forming the first welding portion W1 may be set to be relatively fast, so as to prevent damage of the separator due to high heat concentrated at a specific point. Accordingly, rather than simply temporarily bonding the cap 16 to the sidewall member 11, triple welding is performed by melting and bonding the second current collector plate 32 as well, all while preventing damage to the electrode assembly 20 by sufficiently lowering the internal resistance and minimizing heat generation caused by triple welding.

Next, as shown in FIGS. 18 to 20, the main welding may be performed by seam welding, in which the second inner surface 115 of the sidewall member 11 and the outer circumferential bonding surface 171 of the cap 16 are welded together. Such main welding process may be a process of forming a welding portion W2 in which the can 10 is sealed by firmly welding substantially the entirety of the second inner surface 115 of the sidewall member 11 and the outer circumferential bonding surface 171 of the cap 16 along the circumferential direction.

The second welding portion W2 may be formed using a laser with lower output compared to the laser used for forming the first welding portion W1. For example, the second welding portion may be formed by expanding the size of the irradiated area to have a relatively low energy density (output per unit area).

The scanning speed of the laser for forming the second welding portion W2 may be set to be relatively slow so as to form the welding pool stably. Even when the scanning speed is slow, the heat generated when forming the second welding portion W2 may be dispersed through the second current collector plate 32 made of a highly thermally conductive material, thereby reducing the possibility of damage to the separator.

The power and the scanning speed of the laser for forming the second welding portion W2 should be determined in such a way that substantially the entire section of the outer circumferential bonding surface 171 of the cap 16 in the axial direction can be bonded to the second inner surface 115 of the sidewall member 11. Additional bonding of the second current collector plate 32 to the can 10 may be achieved by melting and bonding a portion of the second current collector plate 32 via additional welding heat.

Since the amount of welding heat generated in forming the second welding portion W2 is desirably significantly less than that generated in the formation of the first welding portion W1, damage to the electrode assembly 20 may desirably be prevented.

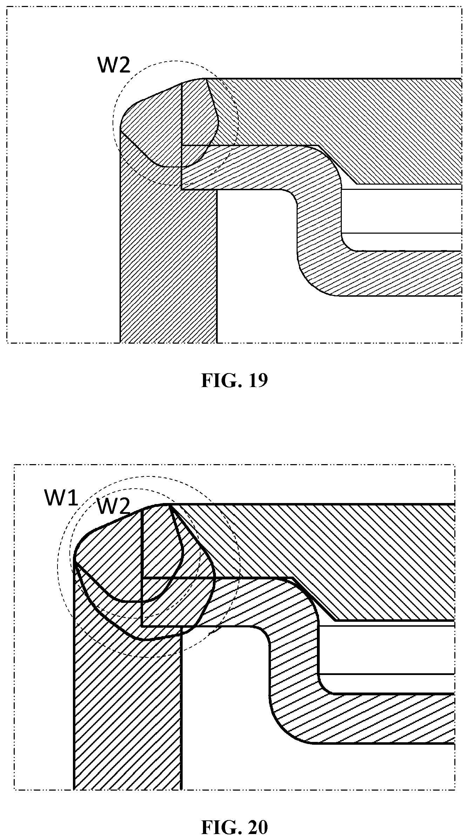

The second welding portion W2 may be formed continuously along the circumferential direction. Accordingly, in a section where the first welding portion W1 has already been formed, the second welding portion W2 may be formed by overlapping with the first welding portion W1 as shown in FIG. 20. That is, as shown in that figure, the shape of the first welding portion W1 may be combined with that of the second welding portion W2, providing the same overall appearance as that of a single welding. As also shown in FIG. 20, the depth *(i.e.,* distance) that the first welding portion W1 extends away from the first or upper end 30 of the can 10 along the axial direction may be deeper than the depth/distance that the second welding portion W2 extends away from the first or upper end 30 of the can 10. Moreover, as FIG. 20 also illustrates, the cross-sectional area of the first welding portion W1 may be different than the cross-sectional area of the second welding portion W2, particularly along a section like that of FIG. 20, in which the plane of the section extends perpendicular to the circumferential direction at the location in which the plane crosses the relevant welding portion W1 or W2. Such sectional plane extends parallel to the central longitudinal axis.

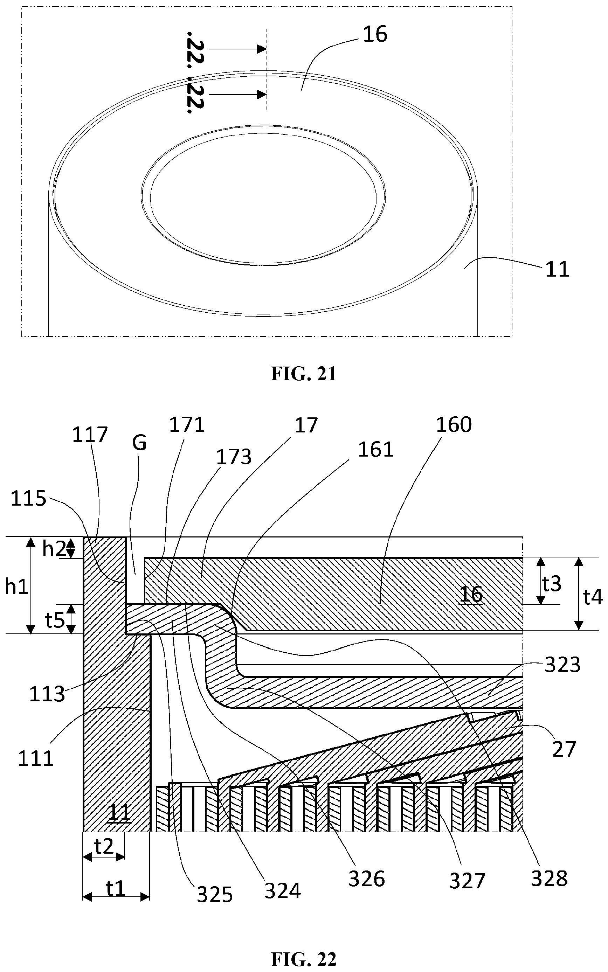

Hereinafter, with reference to FIGS. 21 to 26, a second aspect of the welding structure of a battery cell will be described. In describing the second aspect, the differences from the first aspect will be mainly described in order to avoid redundant descriptions. Therefore, it is to be understood that matters not described in connection with the second aspect may be fully understood in view of the description of the first aspect. Moreover, it is to be understood that each elements of the first aspect described above and the second aspect described hereinafter may be substituted for one another or omitted, as long as there is no conflict with the spirit of the disclosure.

Referring to FIGS. 21 and 22, the outer diameter of the outer circumferential bonding surface 171 of the cap 16 of the second aspect is slightly smaller than that of the cap 16 of the first aspect. Accordingly, a small gap G exists in the radial direction between the second inner surface 115 of the sidewall member 11 and the outer circumferential bonding surface 171 of the cap 16.

The gap G serves as a path through which the laser for welding may directly reach the second current collector plate 32. Therefore, even with a lower laser power than in the first aspect, it is possible to form the first welding portion W1 in which triple welding is performed and also to form the second welding portion W2 in which seam welding is performed.

Even when the gap G exists along the entire circumferential direction, the second bent part 328 of the second current collector plate 32 and the thickness reduction part 161 of the cap 16 are preferably in contact such that the center of the cap 16 is aligned, resulting in the width of the gap G being even along the circumferential direction.

The sidewall member 11 of the second aspect may extend longer than the sidewall member 11 of the first aspect. Accordingly, as shown in FIGS. 21 and 22, when the second current collector plate 32 and the cap 16 are inserted, an overhang part 117 that protrudes further upwardly in the axial direction than the cap 16 is provided at the open end of the sidewall member 11. The overhang part 117 may also be referred to as an "extension" of the sidewall member 11.

The first height h1 of the section of the sidewall member 11 positioned above the inner diameter expansion part 113 in the axial direction may be greater than the sum of the third thickness t3 of the joint 17 of the cap 16 and the fifth thickness t5 of the can connecting part 324 of the collector plate 32. The second height h2 of the overhang part 117 (or extension of the sidewall) may be the length obtained by subtracting the third thickness t3 and the fifth thickness t5 from the first height h1.

The overhang part 117 may reduce the difference in melting time between the sidewall member 11 and the cap 16 by delaying the melting time of the relatively thin sidewall member 11. Moreover, during the welding process, the overhang part 117 may desirably melt and flow into the welding area between the second inner surface 115 of the sidewall member 11 and the outer circumferential bonding surface 171 of the cap 16 In that regard, the diameter of the outer circumferential bonding surface 171 of the cap 16 may be slightly smaller than a diameter of the second inner surface 115 of the sidewall member 11 that is adjacent to the outer circumferential bonding surface 171. In this context, two objects are 'adjacent' when they are spaced close together relative to their outer dimensions, and, within the relevant plane *(i.e.,* the radial plane that is orthogonal to the central longitudinal axis), there are no separate intervening objects between the two. The slightly smaller diameter of the outer circumferential bonding surface 171 of the cap 16 relative to the diameter of the second inner surface 115 of the sidewall member 11 results in a small gap defined between those two components. Such gap may serve as a path through which the laser for welding may directly irradiate the second current collector plate 32. Such gap desirably has an even width in the radial direction along the entire circumferential direction of the cap 16, at least due to the centering of the cap 16 by means of the interaction between the thickness reduction part 161 of the cap 16 and the second current collector plate 32, as discussed above. Moreover, during the welding process, the material of the overhang part 117 desirably flows into the gap between the outer circumferential bonding surface 171 of the cap 16 and the second inner surface 115 of the sidewall member 11 so as to join the cap 16 and the sidewall member 11 together. In one exemplary aspect, the height h2 of the overhang part 117 is 0.2 mm while the thickness t3 of the bonding portion 17 of the cap 16 is 0.5 mm. When the thickness t2 of the overhang part 117 is 0.35 mm, it may provide sufficient material when melted upon welding so as to create a strong joint between the cap 16 and the sidewall member 11. For example, a ratio of overhang height h2 to bonding portion 17 thickness t3 may desirably be in a range from 0.2 to 1.

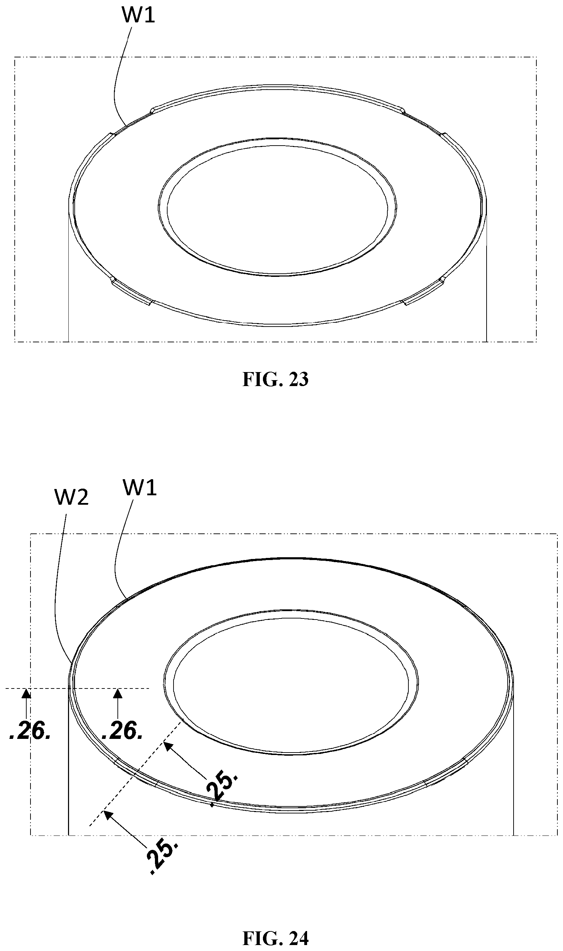

Referring to FIG. 23, the first welding portion W1 may be formed by welding together at discrete locations along the circumferential direction: a section of the second inner surface 115 of the sidewall member 11, a section of the outer circumferential bonding surface 171 of the cap 16, and a section of the can connecting part 324 portion of the second current collector plate 32.

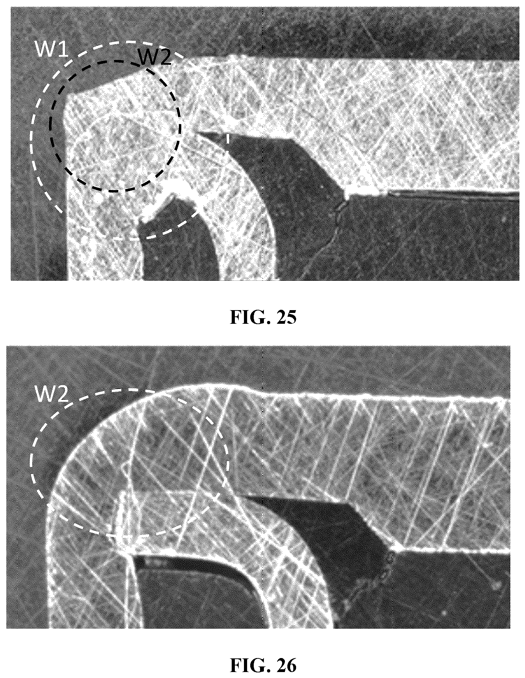

In those portions where the first welding portion W1 is formed, the overhang part 117 is desirably completely melted such that the overhang part 117 in its melted state may penetrate into the contacting area among the section of the second inner surface 115 of the sidewall member 11, the section of the outer circumferential bonding surface 171 of the cap 16, and the section of the can connecting part 324 portion of the second current collector plate 32, so as to fill at least a portion of the gap G as shown in FIG. 25.

Next, referring to FIG. 24, the second welding portion W2 may be formed by melting at least a portion of the second inner surface 115 of the sidewall member 11 and a portion of the outer circumferential bonding surface 171 of the cap 16 along substantially the entire circumferential direction.

When the second welding portion W2 is formed, the overhang part 117 is preferably completely melted such that the melted overhang part 117 may penetrate into the contacting area between section of the second inner surface 115 of the sidewall member 11 and section of the outer circumferential bonding surface 171 of the cap 16, and the gap G as shown in FIG. 26. As a result, the final overall height of the battery cell may be defined by the outer surface of the cap 16. That is, as shown in the illustrated second aspect, the overhang part 117 and the welding portion W do not contribute to the height of the battery cell, such that the height dimension of the battery cell may be managed consistently.

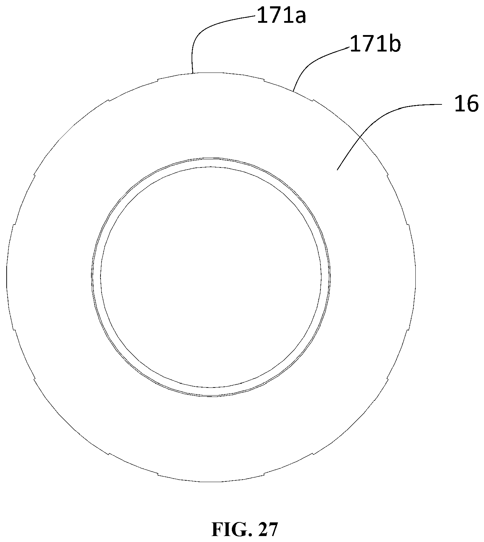

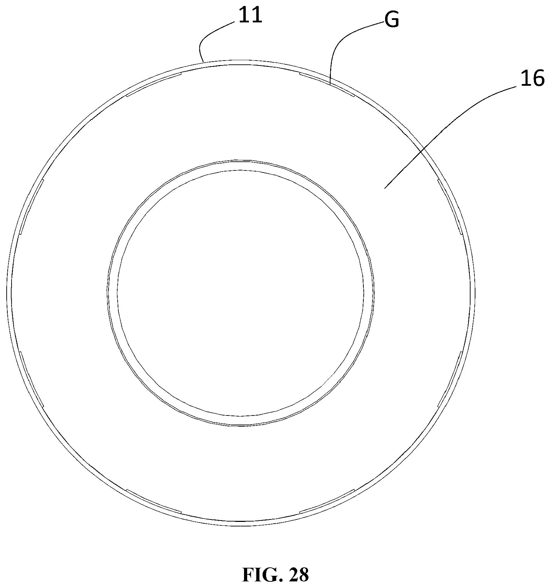

Hereinafter, with reference to FIGS. 27 and 28, a third aspect of the welding structure of a battery cell according to the present disclosure will be described. In such description, the differences from the previous aspects will be mainly described in order to avoid redundant descriptions. Therefore, it is to be understood that matters not the described in connection with this third aspect may be fully understood in view of the descriptions of the other aspects. Moreover, it is to be understood that each elements of the previous aspects described above and the third aspect described hereinafter may be substituted for one another or omitted, as long as there is no conflict with the spirit of the disclosure.

Referring to FIG. 27, the outer circumferential bonding surface 171 of the cap 16 of the third aspect may be provided with a large diameter section 171a and a small diameter section 171b, the small diameter section 171b having a smaller diameter than the large diameter section 171a. The large and small diameter sections 171a, 171b may be alternately arranged with one another along the circumferential direction.

As shown in FIG. 28, the large diameter section 171a of the outer circumferential bonding surface 171 may face and be in contact with the second inner surface 115 of the sidewall member 11 in the radial direction, whereas the small diameter section 171b may face the second inner surface 115 of the sidewall member 11 in the radial direction with the gap G being disposed therebetween. That is, the outer diameter of the outer circumferential bonding surface 171 of the cap 16 in the large diameter section 171a may correspond to the outer diameter of the circumferential contacting surface 325 of the second current collector plate 32. Moreover, the outer diameter of the outer circumferential bonding surface 171 of the cap 16 in the small diameter section 171b may be smaller than the outer diameter of the circumferential contacting surface 325 of the second current collector plate 32.

The large diameter section 171a preferably aligns the center position of the cap 16 with respect to the sidewall member 11 both during and after insertion of the cap 16. Additionally, the small diameter section 171b defines the gap G with respect to the sidewall member 11. Thus, when the cap 16 is manufactured in accordance with the third aspect, the alignment of the center position of the cap 16 may be facilitated, and welding may also be possible even with a relatively low-power laser compared to the first aspect. In addition, when the first welding portion W1 is formed in the area of the gap G where the small diameter section 171b is formed, triple welding may be possible even with a relatively low-power laser, and the amount of heat generated due to the triple welding may also be suppressed.

According to the previously described aspects of the disclosure, the generation of welding heat may be minimized while performing triple welding that includes the second current collector plate. Moreover, the number of man-hours preferably does not increase even when triple welding is performed in conjunction with the tack welding process. The internal resistance may also be beneficially reduced. By utilizing tack welding before the main seam welding process, the position of the cap may be accurately fixed before the seam welding is performed. Therefore, despite the different welding processes involved, sufficient sealing may be obtained *(i.e.,* without perforation or liquid leakage), and welding performance may be improved. In addition, process stability may be increased by preventing thermal damage to cell components or separators caused by welding heat, and durability may also be increased by obtaining dimensional stability and bulging resistance by suppressing dimensional deformation due to inner pressure.

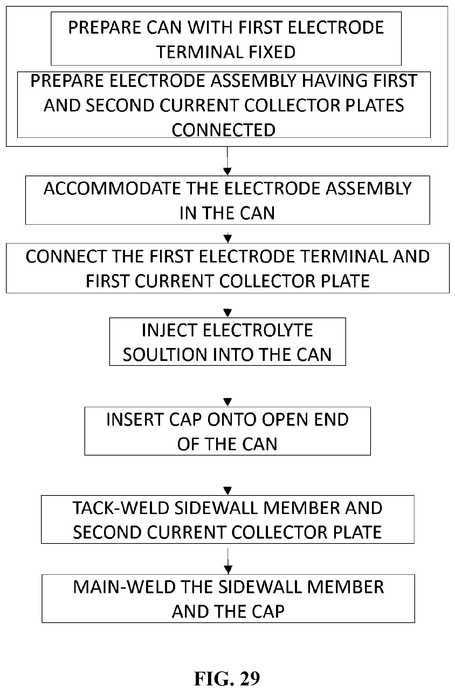

Hereinafter, with reference to FIG. 29, an example of a manufacturing method of the above-described battery cell will be described.

According to the manufacturing method of the battery cell, the can 10 with the first electrode terminal 13 fixed to the bottom member 12 is prepared, and then the electrode assembly 20 having two ends in the axial direction bonded to the first current collector plate 31 and the second current collector plate, respectively, is prepared.

Thereafter, the electrode assembly 20 is accommodated into the can 10 with the first current collector plate 31 facing the bottom member 12. As a result, the second current collector plate 32 is located at the open end side of the can 10. In the process of accommodating the electrode assembly 20 in the can 10, the circumferential contacting surface 325 of the can connecting part 324 provided at outer edge of the second current collector plate 32 in the radial direction is brought into contact with second inner surface 115 of the sidewall member 11.

Here, the can connecting part 324 of the second current collector plate 32 is brought into contact with the inner diameter expansion part 113 of the sidewall member 11 such that adhesion strength of the current collector plate 32 to the radially inner surface of the sidewall member 11 is provided and the insertion depth of the second current collector plate 32 is regulated.

Next, the first current collector plate 31 and the first electrode terminal 13 are bonded.

Then, electrolyte solution is injected into the can 10.

After electrolyte injection is completed, with the open end of the sidewall member 11 covered with a cap 16, the outer circumferential bonding surface 171 and current collector plate contacting surface 173 provided at the edge of the cap 16 are brought into contact with or made to face the second inner surface 115 of the sidewall member 11 and the cap contacting surface 326 of the second current collector plate 32, respectively. In doing so, the thickness reduction part 161 having the form of an inclined surface provided on the underside of the cap 16 along the axial direction may be brought into contact with the second current collector plate 32 so as to align the center of the cap 16.

Thereafter, welding is performed by irradiating a laser on the contacting area between the second inner surface 115 of the sidewall member 11 and the outer circumferential bonding surface 171 of the cap 16 from outside the battery cell along the axial direction.

During the welding process, the overhang part 117 of the sidewall member 11 that protrudes further toward the outer side of the axial direction than the cap 16 may melt and flow into the welding area between the radially inner surface of the sidewall member 11 and the outer circumferential bonding surface 171 of the cap 16.

When performing the above-described welding, a tack welding process may be performed first, followed by the main welding process.

In the tack welding process, a plurality of first welding portions W1 may be formed by irradiating laser on a contacting area of the inner circumferential surface of the sidewall member 11 and the outer circumferential bonding surface 171 of the cap 11 (from outside of the battery cell in the axial direction) at locations spaced apart along the circumferential direction, so as to weld together the inner circumferential surface of the sidewall member 11, the outer circumferential bonding surface 171 of the cap 11, and the can connecting part 324 of the current collector plate 32.

The laser in the tack welding process may have a first output power or a first energy density, and the laser may be scanned along a predetermined region at a first speed.

Next, in the main welding process, the second welding portion W2 is formed by continuously irradiating a laser on the contacting area of the inner circumferential surface of the sidewall member 11 and the outer circumferential bonding surface 171 of the cap 16, as well as moving the laser along the contacting area so as to weld together at least the inner circumferential surface of the sidewall member 11 and the outer circumferential bonding surface 171 of the cap 16.

The laser of the main welding process may have a second output power lower than the first output power, or may have a second energy density lower than the first energy density.

The laser in the main welding process may be scanned and irradiated along substantially the entire circumferential section at a second speed that is slower than the first speed.

It may be sufficient for the tack welding to produce a desired area for electrical connection, whereas it is important to securely seal the can in the main welding process, such as by forming a uniform welding pool. Accordingly, the second speed with respect to the second output power of the laser in the main welding process may be slower than the first speed with respect to the first output power of the laser in the tack welding process.

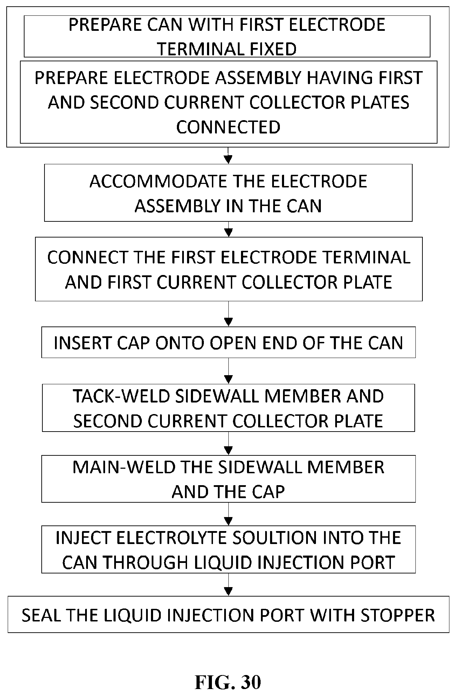

Hereinafter, with reference to FIG. 30, another example of manufacturing method of the above-described battery cell will be described. Such example involves using a cap having a liquid injection port. Compared to the example of FIG. 29, the example of FIG. 30 may involve performing the tack welding and the main welding processes before injecting electrolyte solution into the can via the liquid injection port of the cap, after which the liquid injection port may be sealed with a stopper. Accordingly, since the cap is welded to the can before injecting the electrolyte solution into the can, the welding heat may not affect the electrolyte solution.

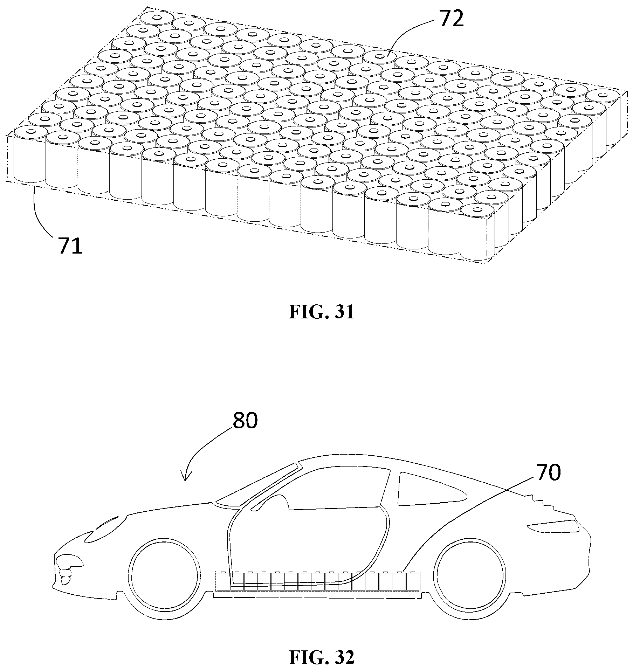

The battery cell 72 manufactured through the welding structure and the welding process described above may be accommodated in the housing 71 of the battery pack 70, as shown in FIG. 31. The battery pack 70 may be constructed using one or more battery modules, each of which is an intermediate form of assembly that contains a plurality of battery cells 72. Alternatively, as shown, the battery pack 70 may be constructed directly of a plurality of battery cells 72 without any intervening battery modules.

Since the above-described battery cell 72 has a large volume, there is no particular difficulty in implementing the battery pack 70 even without using an intermediate structure such as a battery module. **In** addition, the battery cell 72 has less internal resistance and higher energy density than conventional battery cells. Accordingly, the energy density of the battery pack 70 including the battery cell 72 may be higher.

The battery pack 70 with such increased energy density may store the same energy, while reducing its volume and weight. Therefore, when the battery pack 70 to which the battery cell 72 is applied is mounted on a vehicle such as a car 80 that uses electricity as an energy source, as shown in FIG. 32, the driving range of the vehicle with respect to energy may be further expanded.

Although the seam welding structures and methods above were disclosed in the context of a cylindrical battery can, it should be appreciated that, within the scope of the present disclosure, such techniques could similarly be applied to other battery form factors. For example, the relevant battery cell need not have a circular cross-sectional profile orthogonal to the central longitudinal axis, but rather other cross-sectional shapes can be used, including oval, square, rectangular, partially circular, etc. Moreover, the central longitudinal axis need not be oriented orthogonally to the bottom member and/or the cap at respective opposing ends. As an example, the sidewall member of the can (along with the internal components of the can) may form a tube extending along an obliquely-oriented axis with respect to the plane defined by the bottom member and/or cap. Furthermore, the welding techniques disclosed herein could also be utilized outside of the context of cylindrical battery cans, and can also be applied to, for example, batteries having prismatic and pouch type form factors.

Among the nonlimiting benefits that may be provided by some or all aspects of the present disclosure, particularly compared to a method involving welding the entire perimeter of the can in a single process, is that the generation of welding heat may be reduced while ensuring the electrical connection of the current collector plate and the sealing of the can. Moreover, the desired internal resistance may be sufficiently achieved while reliably sealing the can. Welding performance, stability, and durability may also be secured while welding the sidewall member, the cap, and the current collector plate together. **In** addition, the assembly time of a battery cell may be greatly reduced. The volume of the electrode assembly accommodated in the can may also be maximized to increase the energy density of the battery cell.

## Claims

1. A battery cell (72) comprising:
a can (10) having a sidewall (11) circumscribing an internal volume and defining an opening to the internal volume at a first end of the can (10) along a central longitudinal axis;
an electrode assembly (20) within the internal volume of the can (10);
a current collector plate (32) electrically connected to an electrode (27) of the electrode assembly (20), wherein the current collector plate (32) includes a peripheral portion (324) in contact with the sidewall (11) electrically connected with the can (10); and
a cap (16) sealing the opening of the can (10) so as to enclose the internal volume of the can (10),
a plurality of first welding portions (W1), wherein the sidewall (11) along the opening, an edge (17) of the cap (16), and the peripheral portion (324) of the current collector plate (32) are all welded together along each of the plurality of first welding portions (W1), the plurality of first welding portions (W1) being spaced apart from one another along a circumferential direction about the central longitudinal axis, and
a second welding portion (W2) portions of which overlap with the plurality of first welding portions (W1), wherein the sidewall (11) along the opening and the edge (17) of the cap (16) are both welded together along the second welding portion (W2) that extends continuously along the circumferential direction so as to extend substantially entirely about the central longitudinal axis; and
wherein a cross-sectional area of each of the plurality of first welding portions (W1) in a respective plane extending orthogonally to the circumferential direction at a location of the respective first welding portion (W1) is larger than a cross-sectional area of the second welding portion (W2) in the respective plane.

2. The battery cell (72) of claim 1, wherein a depth that the plurality of first welding portions (W1) extend away from the first end of the can (10) along an axial direction is deeper than a depth that the second welding portion (W2) extends away from the first end of the can (10) along the axial direction, the axial direction extending parallel to the central longitudinal axis.

3. A method of manufacturing a battery cell (72) comprising:
positioning a cap (16) and a current collector plate (32) in an assembled position stacked on one another within an opening of a can (10), wherein, in the assembled position, the current collector plate (32) is electrically connected to an electrode assembly (20) received within an internal volume of the can (10), a peripheral portion (324) of the current collector plate (32) is in contact with a radially inner surface (115) of a sidewall (11) of the can (10) surrounding the opening, and the cap (16) is positioned above the current collector plate (32) along a central longitudinal axis of the can (10), such that the cap (16) is further from the electrode assembly (20) than the current collector plate (32);
forming a plurality of first welding portions (W1) in which the sidewall (11) of the can (10) along the opening, an edge (17) of the cap (16), and the peripheral portion (324) of the current collector plate (32) are all welded together so as to secure their positions with respect to one another, the plurality of first welding portions (W1) being spaced apart from one another along a circumferential direction about the central longitudinal axis; and
forming a second welding portion (W2) in which the sidewall (11) of the can (10) along the opening and the edge (17) of the cap (16) are both welded together, the second welding portion (W2) extending continuously along the circumferential direction substantially entirely about the central longitudinal axis, so as to seal the opening of the can (10).

4. The method of claim 3, wherein forming the plurality of first welding portions (W1) includes directing a laser (L) on an area between a radially inner surface (115) of the sidewall (11) and a radially outer surface (171) of the edge (17) of the cap (16).

5. The method of claim 3 or 4, wherein forming the second welding portion (W2) includes using a laser (L) to continuously irradiate an area along a radially inner surface (115) of the sidewall (11) and a radially outer surface (171) of the edge (17) of the cap (16).

6. The method of any one of claims 3 to 5, wherein forming the plurality of first welding portions (W1) and forming the second welding portion (W2) include melting a material of an extension (117) of the sidewall (11) projecting above the cap (16) along an axial direction extending parallel to the central longitudinal axis, such that the material of the extension (117) flows between a radially inner surface (115) of the sidewall (11) and a radially outer surface (171) of the edge (17) of the cap (16).

## Patentansprüche

1. Batteriezelle (72), umfassend:
eine Dose (10) mit einer Seitenwand (11), die ein Innenvolumen umschreibt und entlang einer zentralen Längsachse an einem ersten Ende der Dose (10) eine Öffnung zum Innenvolumen definiert;
eine Elektrodenanordnung (20) innerhalb des Innenvolumens der Dose (10);
eine Stromkollektorplatte (32), die elektrisch mit einer Elektrode (27) der Elektrodenanordnung (20) verbunden ist, wobei die Stromkollektorplatte (32) einen Randabschnitt (324) in Kontakt mit der Seitenwand (11) aufweist, die elektrisch mit der Dose (10) verbunden ist; und
eine Kappe (16), die die Öffnung der Dose (10) abdichtet, um das Innenvolumen der Dose (10) zu einzuschließen,
eine Vielzahl von ersten Schweißabschnitten (W1), wobei die Seitenwand (11) entlang der Öffnung, ein Rand (17) der Kappe (16) und der Randabschnitt (324) der Stromkollektorplatte (32) alle entlang jedem der Vielzahl von ersten Schweißabschnitten (W1) zusammengeschweißt sind, wobei die Vielzahl von ersten Schweißabschnitten (W1) entlang einer Umfangsrichtung um die zentrale Längsachse voneinander beabstandet sind, und
einen zweiten Schweißabschnitt (W2), dessen Abschnitte mit der Vielzahl von ersten Schweißabschnitten (W1) überlappen, wobei die Seitenwand (11) entlang der Öffnung und der Rand (17) der Kappe (16) beide entlang dem zweiten Schweißabschnitt (W2) zusammengeschweißt sind, der sich kontinuierlich entlang der Umfangsrichtung erstreckt, um sich im Wesentlichen vollständig um die zentrale Längsachse zu erstrecken; und
wobei eine Querschnittsfläche von jedem der Vielzahl von ersten Schweißabschnitten (W1) in einer jeweiligen Ebene, die sich orthogonal zu der Umfangsrichtung an einer Stelle des jeweiligen ersten Schweißabschnitts (W1) erstreckt, größer ist als eine Querschnittsfläche des zweiten Schweißabschnitts (W2) in der jeweiligen Ebene.

2. Batteriezelle (72) nach Anspruch 1, wobei eine Tiefe, um die sich die Vielzahl von ersten Schweißabschnitten (W1) von dem ersten Ende der Dose (10) entlang einer axialen Richtung weg erstreckt, tiefer ist als eine Tiefe, um die sich der zweite Schweißabschnitt (W2) von dem ersten Ende der Dose (10) entlang der axialen Richtung weg erstreckt, wobei sich die axiale Richtung parallel zu der zentralen Längsachse erstreckt.

3. Verfahren zum Herstellen einer Batteriezelle (72), umfassend:
Positionieren einer Kappe (16) und einer Stromkollektorplatte (32) in einer zusammengebauten Position, die innerhalb einer Öffnung einer Dose (10) aufeinander gestapelt sind, wobei in der zusammengebauten Position die Stromkollektorplatte (32) elektrisch mit einer Elektrodenanordnung (20) verbunden ist, die innerhalb eines Innenvolumens der Dose (10) aufgenommen ist, ein Randabschnitt (324) der Stromkollektorplatte (32) in Kontakt mit einer radial inneren Oberfläche (115) einer Seitenwand (11) der Dose (10) steht, die die Öffnung umgibt, und die Kappe (16) entlang einer zentralen Längsachse der Dose (10) über der Stromkollektorplatte (32) positioniert ist, so dass die Kappe (16) weiter von der Elektrodenanordnung (20) entfernt ist als die Stromkollektorplatte (32);
Bilden einer Vielzahl von ersten Schweißabschnitten (W1), in denen die Seitenwand (11) der Dose (10) entlang der Öffnung, ein Rand (17) der Kappe (16) und der Randabschnitt (324) der Stromkollektorplatte (32) alle zusammengeschweißt sind, um ihre Positionen in Bezug aufeinander zu sichern, wobei die Vielzahl von ersten Schweißabschnitten (W1) entlang einer Umfangsrichtung um die zentrale Längsachse voneinander beabstandet sind; und
Bilden eines zweiten Schweißabschnitts (W2), in dem die Seitenwand (11) der Dose (10) entlang der Öffnung und der Rand (17) der Kappe (16) beide zusammengeschweißt sind, wobei sich der zweite Schweißabschnitt (W2) kontinuierlich entlang der Umfangsrichtung im Wesentlichen vollständig um die zentrale Längsachse erstreckt, um die Öffnung der Dose (10) abzudichten.

4. Verfahren nach Anspruch 3, wobei das Bilden der Vielzahl von ersten Schweißabschnitten (W1) das Richten eines Lasers (L) auf einen Bereich zwischen einer radial inneren Oberfläche (115) der Seitenwand (11) und einer radial äußeren Oberfläche (171) des Rands (17) der Kappe (16) beinhaltet.

5. Verfahren nach Anspruch 3 oder 4, wobei das Bilden des zweiten Schweißabschnitts (W2) das Verwenden eines Lasers (L) beinhaltet, um kontinuierlich einen Bereich entlang einer radial inneren Oberfläche (115) der Seitenwand (11) und einer radial äußeren Oberfläche (171) des Rands (17) der Kappe (16) zu bestrahlen.

6. Verfahren nach einem der Ansprüche 3 bis 5, wobei das Bilden der Vielzahl von ersten Schweißabschnitten (W1) und das Bilden des zweiten Schweißabschnitts (W2) das Schmelzen eines Materials einer Verlängerung (117) der Seitenwand (11) beinhaltet, die über die Kappe (16) entlang einer axialen Richtung vorsteht, die sich parallel zu der zentralen Längsachse erstreckt, sodass das Material der Verlängerung (117) zwischen einer radial inneren Oberfläche (115) der Seitenwand (11) und einer radial äußeren Oberfläche (171) des Rands (17) der Kappe (16) fließt.

## Revendications

1. Élément de batterie (72) comprenant :
un boîtier (10) possédant une paroi latérale (11) entourant un volume interne, et définissant une ouverture pour le volume interne à un premier bout du boîtier (10) dans un axe longitudinal central ;
un ensemble d'électrodes (20) au sein du volume interne du boîtier (10) ;
une plaque collectrice de courant (32) connectée électriquement à une électrode (27) de l'ensemble d'électrodes (20), la plaque collectrice de courant (32) comprenant une partie périphérique (324) située au contact de la paroi latérale (11) connectée électriquement au boîtier (10) ; et
un couvercle (16) scellant l'ouverture du boîtier (10) de manière à renfermer le volume interne du boîtier (10),
une pluralité de premières parties de soudage (W1), la paroi latérale (11) le long de l'ouverture, un bord (17) du couvercle (16), et la partie périphérique (324) de la plaque collectrice de courant (32) étant tous soudés ensemble le long de chacune de la pluralité de premières parties de soudage (W1), la pluralité de premières parties de soudage (W1) étant espacées l'une de l'autre dans le sens circonférentiel autour de l'axe longitudinal central, et
une deuxième partie de soudage (W2), des parties de laquelle chevauchent la pluralité de premières parties de soudage (W1), la paroi latérale (11) le long de l'ouverture et un bord (17) du couvercle (16) étant tous les deux soudés ensemble le long de la deuxième partie de soudage (W2), qui s'étend en continu dans la direction circonférentielle de façon à se déployer presque entièrement autour de l'axe longitudinal central ; et
une section transversale de chacune de la pluralité de premières parties de soudage (W1) dans un plan respectif s'étendant perpendiculairement à la direction circonférentielle à un emplacement de la première partie de soudage (W1) respective étant plus grande qu'une surface transversale de la deuxième partie de soudage (W2) dans le plan respectif.

2. Élément de batterie (72) selon la revendication 1, une profondeur à laquelle la pluralité de premières parties de soudage (W1) s'étendent dans le sens opposé au premier bout du boîtier (10) dans le sens axial étant supérieure à une profondeur à laquelle la deuxième partie de soudage (W2) s'étend dans le sens opposé au premier bout du boîtier (10) dans le sens axial, le sens axial s'étendant parallèlement à l'axe longitudinal central.

3. Procédé de fabrication d'un élément de batterie (72) comprenant :
le positionnement d'un couvercle (16) et d'une plaque collectrice de courant (32) dans une position assemblée, empilés l'un sur l'autre au sein d'une ouverture d'un boîtier (10), et, dans la position assemblée, la plaque collectrice de courant (32) étant connectée électriquement à un ensemble d'électrodes (20) reçu dans un volume interne du boîtier (10), une partie périphérique (324) de la plaque collectrice de courant (32) se trouvant au contact d'une surface radialement intérieure (115) d'une paroi latérale (11) du boîtier (10) entourant l'ouverture, et le couvercle (16) étant positionné au-dessus de la plaque collectrice de courant (32) dans un axe longitudinal central du boîtier (10), de sorte que le couvercle (16) soit plus éloigné de l'ensemble d'électrodes (20) que la plaque collectrice de courant (32) ;
la formation d'une pluralité de premières parties de soudage (W1) dans lesquelles la paroi latérale (11) du boîtier (10) le long de l'ouverture, un bord (17) du couvercle (16), et la partie périphérique (324) de la plaque collectrice de courant (32) sont tous soudés ensemble de façon à fixer leur emplacement les uns par rapport aux autres, la pluralité de premières parties de soudage (W1) étant espacées l'une de l'autre dans le sens circonférentiel autour de l'axe longitudinal central ; et
la formation d'une deuxième partie de soudage (W2) dans laquelle la paroi latérale (11) du boîtier (10) le long de l'ouverture, et le bord (17) du couvercle (16) sont soudés tous les deux ensemble, la deuxième partie de soudage (W2) s'étendant en continu dans le sens longitudinal presque entièrement autour de l'axe longitudinal central de façon à sceller l'ouverture du boîtier (10).

4. Procédé selon la revendication 3, la formation de la pluralité de premières parties de soudage (W1) comportant l'application d'un laser (L) sur une zone entre un surface radialement intérieure (115) de la paroi latérale (11) et une surface radialement extérieure (171) du bord (17) du couvercle (16).

5. Procédé selon la revendication 3 ou 4, la formation de la deuxième partie de soudage (W2) comportant l'application d'un laser (L) pour irradier en continu une zone le long d'une surface radialement intérieure (115) de la paroi latérale (11) et une surface radialement extérieure (171) du bord (17) du couvercle (16).

6. Procédé selon une quelconque des revendications 3 à 5, la formation de la pluralité de premières parties de soudage (W1) et la formation de la deuxième partie de soudage (W2) comprenant la fusion d'un matériau d'une extension (117) de la paroi latérale (11) faisant saillie au-dessus du couvercle (16) dans le sens axial, s'étendant parallèlement à l'axe longitudinal central, de sorte que le matériau de l'extension (117) s'écoule entre une surface radialement intérieure (115) de la paroi latérale (11) et une surface radialement extérieure (171) du bord (17) du couvercle (16).
